# FASCICULE DE BREVET EUROPEEN

(11) **EP 2 043 968 B1**
(45) Date de publication et mention de la délivrance du brevet: **26.10.2011**
(21) Numéro de dépôt: 07731464.9
(22) Date de dépôt: 16.05.2007
(51) Int. Cl.: C05F 3/00, C05F 11/08, A01G 1/04, A01N 63/02

(54) **NOUVELLES COMPOSITIONS D'INOCULA FONGIQUES, LEUR PROCEDE DE PREPARATION ET LEUR APPLICATION A L'AMELIORATION DE LA CROISSANCE DES CULTURES**
NEUE PILZLICHE INOKULUMZUSAMMENSETZUNGEN, VERFAHREN ZU IHRER HERSTELLUNG UND IHRE VERWENDUNG FÜR DIE VERBESSERUNG DES WACHSTUMS VON KULTUREN
NOVEL COMPOSITIONS OF FUNGAL INOCULA, METHOD FOR THE PREPARATION THEREOF AND USE THEREOF FOR IMPROVING THE GROWTH OF CULTURES

(30) Priorité: 25.07.2006 FR 0606794
(43) Date de publication de la demande: 08.04.2009
(73) Titulaire: Institut de Recherche pour le Développement ( IRD), 75480 Paris Cedex 10 (FR)
(72) Inventeur: DUPONNOIS, Robin, F-71640 Mercurey (FR)
(74) Mandataire: Grosset-Fournier, Chantal Catherine
(86) Numéro de dépôt international: PCT/FR2007/000828
(87) Numéro de publication internationale: WO 2008/012399

(56) Documents cités:
- US-A1- 2004 211 721
- DUPONNOIS R ET AL: "Functional diversity of soil microbial community, rock phosphate dissolution and growth of Acacia seyal as influenced by grass-, litter- and soil-feeding termite nest structure amendments" GEODERMA, ELSEVIER SCIENCE, AMSTERDAM, NL, vol. 124, no. 3-4, février 2005 (2005-02), pages 349-361, XP004669070 ISSN: 0016-7061
- DUPONNOIS ET AL: "Fluorescent pseudomonads occuring in Macrotermes subhyalinus mound structures decrease Cd toxicity and improve its accumulation in sorghum plants" SCIENCE OF THE TOTAL ENVIRONMENT, ELSEVIER, vol. 370, no. 2-3, 1 novembre 2006 (2006-11-01), pages 391-400, XP005684838 ISSN: 0048-9697
- UMEH V C ET AL: "RELATIONSHIP BETWEEN CHARACTERISTICS OF MACROTERMES SPP. MOUND MATERIALS AND THEIR SURROUNDING SOILS" INSECT SCIENCE AND ITS APPLICATION, ICIPE SCIENCE PRESS, NAIROBI, KE, vol. 19, no. 2-3, avril 1999 (1999-04), pages 251-255, XP008077981 ISSN: 0191-9040
- OLIVEIRA L A D ET AL: "THE USE OF TERMITE NESTS AND CHICKEN MANURE AS A FERTILIZER FOR LETTUCE IN RED-YELLOW PODZOLS OF THE MANAUS REGION BRAZIL" ACTA AMAZONICA, INOA, MANAUS,, BR, vol. 15, no. 1-2, 1985, pages 13-18, XP008077964 ISSN: 0044-5967

## Description

La présente invention concerne de nouvelles compositions d'inocula fongiques, leur procédé de préparation et leur application à l'amélioration de la croissance des cultures.

La mycorhization est une association à bénéfice mutuel entre un végétal et un champignon mycorhizien

L'importance des champignons mycorhiziens dans les plantations forestières a été mise en évidence pour la première fois en 1910 dans des essais d'introduction de pins exotiques au Kenya. Alors que ces plantations se soldaient généralement par des échecs spectaculaires (plants chlorotiques, mortalité très élevée), sur les conseils du " Royal Botanic Gardens ", du sol de vieilles plantations de pins fut importé d'Afrique du Sud afin d'être utilisé comme substrat de culture en pépinière.

En effet, ce sol contenait des mycorhizes qui sont des organes mixtes situés sur les racines des végétaux, formés par la juxtaposition de deux types d'organismes : la plante supérieure et les filaments mycéliens souterrains du champignon. Les champignons vont puiser dans le sol les éléments minéraux, et plus particulièrement les moins mobiles tels que le zinc, le cuivre et le phosphore qu'ils vont procurer à la plante, indispensables au développement de celle-ci. En échange, la plante donne au champignon des sucres et des substances de croissance assurant ainsi sa survie. Les mycorhizes jouent un rôle important dans l'assimilation de certaines formes d'azote ainsi que dans l'absorption de l'eau du sol.

Cette technique employant un sol riche en propagules fongiques mycorhiziennes fut rapidement divulguée avec succès dans d'autres pays d'Afrique comme la Tanzanie, Ouganda, Malawi, etc.

Depuis, plusieurs techniques de mycorhization ont été développées et celle utilisant des champignons mycorhiziens seuls repose dorénavant sur les étapes suivantes : (i) Isolement et purification de souches fongiques, (ii) sélection de souches en conditions contrôlées de souches fongiques performantes pour un paramètre donné (par exemple : effet de la souche sur la croissance de la plante hôte) et (iii) multiplication de la souche en conditions axéniques et production d'inocula fongiques.

On distingue deux types de champignons mycorhiziens, les champignons ectomycorhiziens qui concerne - essentiellement les essences forestières et les champignons endomycorhiziens qui concernent les espèces végétales herbacées.

En ce qui concernent les champignons ectomycorhiziens, deux formulations d'inoculum ont été testées et ont montré des effets spectaculaires en pépinière : (i) l'inoculum de type tourbe-vermiculite et (ii) l'inoculum de type billes d'alginate de calcium.

Une autre technique utilisant des bactéries mycorhiziennes a également été développée notamment dans le brevet US 5,935,839. Ce brevet décrit des compostions d'inoculum comprenant des souches de bactéries mycorhiziennes (*Arthrobacter sp, Pseudomonas fluorescent*) pour favoriser la croissance des conifères.

Une troisième technique utilisant une association de champignon mycorhizien est également connue. Ainsi le brevet FR 2 678 281 décrit l'utilisation d'un inoculum fongique de type tourbe-vermiculite comprenant un champignon ectomycorhizien (L. *lacacata* 10% (v :v)) en association avec une bactérie (*Bacillus, Pseudomonas fluorescent)*.

Le brevet US 6 133 196 décrit l'utilisation d'un inoculum fongique de type tourbe-vermiculite-perlite comprenant un champignon ectomycorhizien (*Heleboma arenosa* ou *Laccaria bicolor*) en association avec une bactérie (*Streptomyces, Pseudomonas diminuta).*

Une dernière technique comprenant une association de champignon mycorhizien avec d'autres composants a aussi été décrite et fait par exemple l'objet du brevet FR 2 865 897 qui concerne la production d'inocula fongiques comprenant un champignon endomycorhizien en association avec un agent stimulant (sorgolactone, déméthylsorgolactone, alectrole, strigole et orbanchole). Le brevet EP 0209627 concerne un procédé de préparation de champignons endomycorhiziens en association avec des cultures d'organes de racines sur un support poreux constitué de vermiculite seule ou en association avec de la tourbe.

Enfin, une publication de Duponnois R. et al. (FEMS Microbiology Ecology, 2006, 56 :292-303) décrit l'utilisation de champignon ectomycorhizien en association avec de la poudre de termitières pour l'amélioration de la croissance des plants forestiers. La composition décrite comprend un champignon ectomycorhizien. Cette composition est utilisée à la dose importante de 1000 ml par graine ou plant.

Une autre publication de Duponnois R. et al (Geoderma, 2005, 124: 349-361) décrit l'utilisation de poudre de termitière en tant qu'agent stimulant la mycorhization de cultures. Comme les termites utilisent des fongus pour digérer les déchets qu'ils accumulent , ce document décrit l'utilisation d'une composition comprenant un inoculum fongique et de la poudre de termitière en tant qu'agent stimulant la mycorhization.

Cependant, toutes ces techniques possèdent plusieurs inconvénients dont le principal est la production en grande quantité de l'inoculum qui nécessite du matériel relativement sophistiqué, présentant un coût, par exemple pour des opérations de reboisement, incompatibles avec les budgets généralement alloués pour ce type d'opération et plus particulièrement dans les pays du sud. De plus, l'inoculum fongique de type tourbe-vermiculite ou bille d'alginate est généralement produit dans des bocaux en verre ou des sachets en plastique, qui ont un encombrement important et dont le transport doit être effectué en respectant la chaîne du froid.

Un des buts de l'invention est de fournir une composition d'inoculum fongique utilisable en tant qu'agent stimulant la mycorhization de cultures ayant une formulation telle qu'elle puisse être utilisé à des doses nettement inférieures à celles classiquement utilisées.

Un autre but de la présente invention, est de fournir des compositions d'inoculum fongique adaptables aux deux types de symbiose mycorhizienne (ectomycorhizienne et endomycorhizienne), ce qui permet la production de plants mycorhizés d'une large gamme d'espèces végétales allant des arbres fruitiers aux plants forestiers, contrairement à l'état de la technique, où les techniques utilisées ne sont valables que pour un type de mycorhization.

L'un des autres buts de la présente invention est de fournir des compositions d'inoculum fongique dans lesquelles l'association de deux champignons ectomycorhiziens et endomycorhiziens permet de stimuler la croissance des essences ligneuses à croissance rapide des genres Casuarina, Allocasuarina, Eucalyptus et Acacia d'origine australienne.

Un autre but de l'invention est de fournir un procédé de stimulation de la mycorhization tel qu'il permette d'éviter les pertes de propagules fongiques habituellement enregistrées dans les techniques classiques de mycorhization.

La présente invention concerne l'utilisation d'au moins un inoculum fongique et de poudre de termitières, en tant qu'agent stimulant la mycorhization de cultures notamment forestières, céréalières, fourragères, maraîchères; fruitières ou horticoles, ledit inoculum étant utilisé à une dose par élément unitaire de culture, notamment graine ou plant, d'environ au moins dix fois inférieure à la dose utilisée en l'absence de poudre de termitières.

Dans la présente invention, il a été trouvé que l'association de poudre de termitières à un inoculum fongique permet de réduire considérablement les doses d'inoculum utilisées pour la mycorhization et de favoriser ainsi la reforestation, notamment des zones tropicales et méditerranéennes dans lesquelles la pratique de la mycorhization contrôlée se justifie pleinement (sols carencés et érodés, désertification avancée, conservation de la biodiversité menacée par les activités anthropiques...), en diminuant considérablement le coût de celle-ci.

De par la dose utilisée, un premier avantage de la présente invention est de favoriser la reforestation, notamment des zones tropicales et méditerranéennes dans lesquelles la pratique de la mycorhization contrôlée se justifie pleinement (sols carencés et érodés, désertification avancée, conservation de la biodiversité menacée par les activités anthropiques...), en diminuant considérablement le coût de celle-ci. De plus, la faible quantité de poudre de termitières utilisée (1 à 10% v :v) dans la présente invention évite le risque de dépeuplement de régions entières de leurs nids de termites.

L'expression « élément unitaire de culture » désigne ici une graine, semence, grain, fruit, pépin, noyau ou une plante sans être limité à ceux-ci permettant d'obtenir une culture forestière, céréalière, fourragère, maraîchère, fruitière ou horticole.

La dose habituellement utilisée dans l'état de la technique est de 100 ml à 1000 ml d'inoculum de type tourbe-vermiculite ou alginate de calcium en association on non avec un autre composant, par graine. Par conséquent, la dose utilisée ici est au moins inférieure à 10 ml d'inoculum et de poudre de termitières, par graine.

Dans un mode de réalisation préféré de la présente invention, la poudre de termitières utilisée provient de termites du genre *Macrotermes* et préférentiellement du genre *Macrotermes subhyalinus.*

Selon un mode de réalisation avantageux de la présente invention, l'inoculum fongique comprend au moins un champignon endomycorhizien, du genre *Glomus,* notamment choisi parmi *Glomus mosseae, Glomus fasciculatus, Glomus aggregatum, Glomus, intraradices* et préférentiellement *Glomus intraradices.*

On entend par champignon endomycorhizien, un champignon, dont le mycélium pénètre les cellules racinaires et développe des arbuscules ou des vésicules, lorsqu'il est associé à des racines de plantes. Il ne forme pas de manteau fongique autour de la racine.(Smith, S.E. & Read, D.J. (1997). Mycorrhizal symbiosis. 2nd edition, UK, Academic Press.)

Selon un autre mode de réalisation avantageux de la présente invention, l'inoculum fongique comprend au moins un champignon ectomycorhizien, du genre *Pisolithus,* notamment choisi parmi *Pisolithus albus, Pisolithus tinctorius,* ou du genre *Scleroderma,* notamment choisi parmi Scleroderma dyctiosporum, *Scleroderma verrucosum* et préférentiellement *Scleroderma dictyosporum,*

On entend par champignon ectomycorhizien, un champignon dont le mycélium se développe entre les cellules du cortex racinaires, mais ne pénètre pas dans les cellules vivantes, formant ainsi « le réseau intercellulaire de Hartig ». Il forme un manteau fongique autour de la racine. (Smith, S.E. & Read, D.J. (1997). Mycorrhizal symbiosis. 2nd edition, UK, Academic Press.)

Selon un autre mode de réalisation avantageux de la présente invention l'inoculum fongique comprend un champignon endomycorhizien du genre *Glomus,* notamment choisi parmi *Glomus mosseae, Glomus fasciculatus, Glomus aggregatum, Glomus intraradices* et préférentiellement *Glomus intraradices* et un champignon ectomycorhizien du genre *Pisolithus,* notamment choisi parmi *Pisolithus albus, Pisolithus tinctorius,* ou du genre *Scleroderma,* notamment choisi parmi *Scleroderma dyctiosporum, Scleroderma verrucosum* et préférentiellement *Scleroderma dictyosporum,*

Cette association de champignon ectomycorhizien et endomycorhizien est plus particulièrement avantageuse pour les essences ligneuses à croissance rapide des genres Casuarina, Allocasuarina, Eucalyptus et Acacia d'origine australienne.

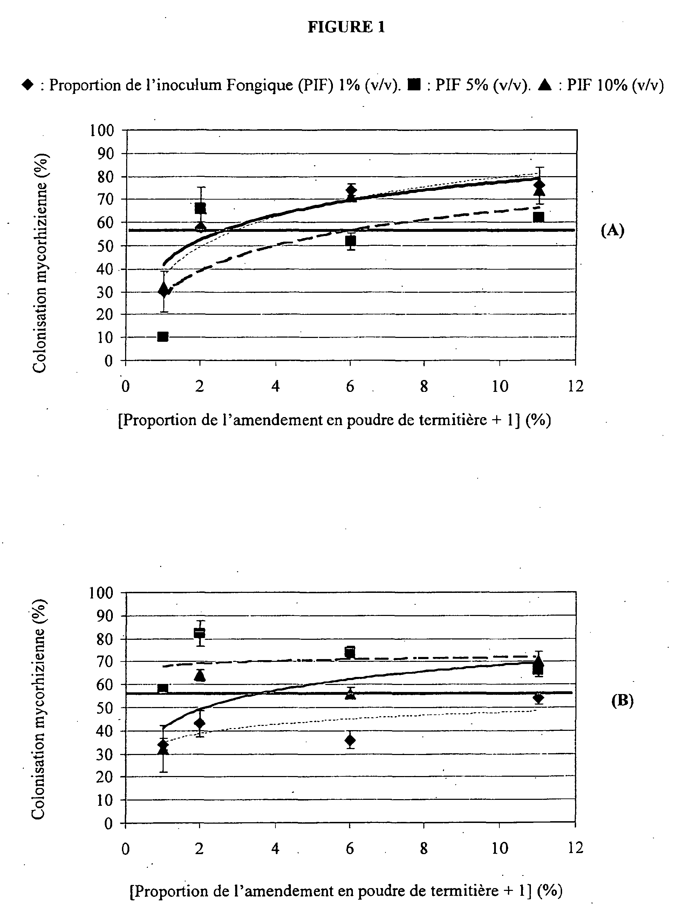

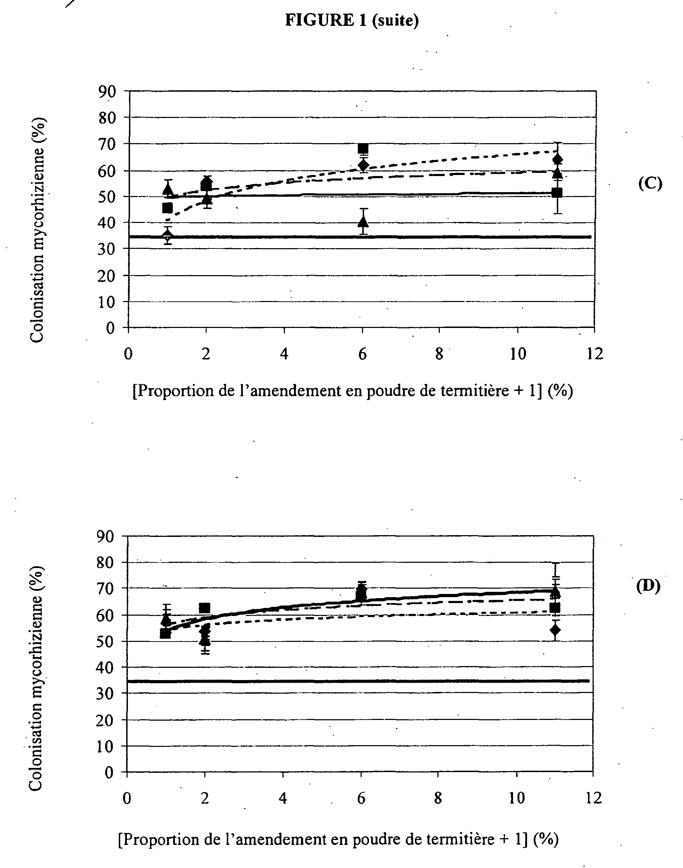

Ces espèces forestières sont fréquemment utilisées dans les programmes de reboisement en milieu tropical humide et sec et l'association des deux types de champignons mycorhiziens permet d'obtenir des gains de croissance par rapport à ceux enregistrés quand un type seulement de champignon est inoculé. (Voir figure 1)

Selon un mode de réalisation préféré de l'invention, l'inoculum fongique est préparé par croissance sur un support, d'un champignon endomycorhizien ou d'un champignon ectomycorhizien, la croissance du champignon endomycorhizien ayant lieu sur un support, notamment de type sable, notamment en présence d'une plante mycotrophe, la croissance du champignon ectomycorhizien ayant lieu sur un support de type tourbe-vermiculite ou de billes d'alginate de calcium.

S'agissant du champignon endomycorhizien, il se présente par exemple sous forme de racines sèches mycorhizées, coupées en morceaux de 1 mm (comprenant environ 25 vésicules par mm de racines) et mélangées à du sable (stérilisé à 140°C, pendant 40 min) à une dose de 2 g de racines mycorhizées dudit champignon endomycorhizien.

La plante mycotrophe grâce au développement de ses racines va multiplier le champignon endomycorhizien.

A titre d'exemples de plantes mycotrophes, on peut citer le mil, le sorgho et le maïs.

Le délai de croissance à l'aide de la plante mycotrophe est de l'ordre de 4 mois.

S'agissant du champignon ectomycorhizien, le support utilisé est du type tourbe-vermiculite et la souche fongique (un implant fongique prélevé à partir d'une culture « mère », à une dose d'environ 10 mg de poids sec de biomasse par implant) se développe et colonise en conditions stériles un mélange de tourbe et de vermiculite (1:4;v:v) et humidifié par une solution nutritive.

Selon un mode de réalisation avantageux, après trois mois de culture dans des bocaux à 25°C, l'inoculum fongique est mélangé au substrat de culture à raison de 1 volume d'inoculum pour 9 volumes de sol de culture.

Ce mélange est ensuite réparti dans des gaines où est plantée l'essence forestière choisie. Si la production est effectuée dans des planches de pépinière, l'inoculum peut être apporté à raison de 2 litres par m² de sol où seront semées les graines de l'essence choisie.

Dans le cas du support billes d'alginate, selon un mode de réalisation avantageux, le mycélium est multiplié dans un milieu nutritif liquide en fermenteur puis broyé et mélangé à une solution d'alginate de Na. Cette suspension de fragments de mycélium est ensuite versée en goutte à goutte dans une solution de chlorure de calcium. L'alginate polymérise en présence de calcium donnant ainsi des billes d'alginate de calcium de diamètre choisi contenant les propagules fongiques. Ces billes sont ensuite inoculées au sol des planches de pépinière à raison de 1 litre d'inoculum par m².

Selon un autre mode de réalisation avantageux de l'invention, l'inoculum fongique et la poudre de termitières sont associés à un substrat, notamment choisi parmi le sable, le compost provenant de résidus de culture et préférentiellement de terreau, ou un mélange de sable et de compost

L'inoculum fongique utilisé ici et au moment de son utilisation est l'inoculum fongique après croissance, par exemple durant 4 mois pour le champignon endomycorhizien et trois mois, par exemple, dans les bocaux pour le champignon ectomycorhizien.

Le terme compost désigne ici un produit obtenu par conversion et valorisation contrôlée des matières organiques (sous produits de la biomasse, déchets organiques d'origine biologique) en un produit stabilisé, hygiénique et riche en composés humiques.

Selon un mode de réalisation préféré de l'invention, le rapport inoculum fongique: poudre de termitières est compris de 0,1 % (v:v) à 10 % (v:v), préférentiellement 0,1%(v:v) à 5% (v:v) et plus préférentiellement de 0, 1 % (v:v) à 1% (v:v)

La faible quantité de poudre de termitières utilisée (0,1% à 10% v:v) dans la présente invention évite le risque de dépeuplement de régions entières de leurs nids de termites.

Selon un autre mode de réalisation avantageux de l'invention, le rapport inoculum fongique: substrat de l'inoculum est compris de 1% (v:v) à 10% (v:v), préférentiellement de 1 % (v:v) à 5% (v:v) et vaut plus préférentiellement 1 % (v:v)

Selon encore un autre mode de réalisation avantageux de l'invention, le rapport poudre de termitières : substrat de l'inoculum est compris de 1 % (v:v) à 10% (v:v) et préférentiellement de 1% (v:v) à 5% (v:v) et vaut plus préférentiellement 1% (v:v).

Selon encore un autre mode de réalisation du procédé ci-dessus, le champignon endomycorhizien est utilisé dans des espaces destinés aux cultures, notamment céréalières, fourragères, maraîchères, fruitières ou horticoles et préférentiellement maraîchères, fruitières ou horticoles.

Les cultures céréalières comprennent notamment l'orge, l'avoine et le blé, cette liste n'étant pas limitative.

Par culture fourragère il faut comprendre les légumineuses telles que le trèfle, la luzerne et le lotier corniculé, et des graminées, comme la fléole des prés, le dactyle pelotonné, cette liste n'étant pas limitative.

Les cultures maraîchères comprennent notamment les tomates, les aubergines, les pommes de terre, les carottes, la laitue, le concombre, le melon, le chou, le chou-fleur...

Les cultures fruitières comprennent notamment des pommes, poires, pêches, raisin, cerise, prune, agrumes, cette liste n'étant pas limitative.

Les cultures horticoles comprennent notamment les fleurs, les plantes ornementales, cette liste n'étant pas limitative.

Le terme « espaces destinés aux cultures » désigne ici tout type de contenant comprenant des éléments appropriés à la culture tels que des pots, bacs, bocaux, plaques alvéolées sans être limité à ceux-ci ainsi que tout type de terrain, pièce de terre, champ, serre....

Dans un mode de réalisation préféré du procédé décrit ci-dessus, le champignon ectomycorhizien est utilisé dans des espaces destinés aux cultures forestières.

Le terme espaces destinés aux cultures a ici la même signification que ci-dessus.

Les cultures forestières comprennent notamment les myrtacées, les pinacées, les abiétacées, les fagacées, les tiliacées, les ulmacées les salicacées; cette liste n'étant pas limitative.

Selon un autre mode de réalisation avantageux de l'invention, un champignon endomycorhizien et un champignon ectomycorhizien sont utilisés dans des espaces destinés aux cultures forestières, notamment les essences ligneuses des genres Casuarina, Allocasuarina, Eucalyptus et Acacia d'origine australienne.

Les deux champignons sont utilisés de la même manière que décrit précédemment pour chaque champignon, à savoir que le champignon endomycorhizien mélangé à un support, notamment de type sable et le champignon ectomycorhizien est mis en croissance sur un support de type tourbe-vermiculite ou de billes d'alginate de calcium, par exemple pendant trois mois.

L'invention concerne également une composition comprenant :
a. un inoculum fongique comprenant au moins un champignon endomycorhizien du genre *Glomus,* notamment choisi parmi *Glomus mosseae, Glomus fasciculatus, Glomus aggregatum, Glomus intraradices* et préférentiellement *Glomus intraradices,*
b. de la poudre de termitières, la taille des particules de ladite poudre de termitières étant comprise de 1µm à 1000 µm et préférentiellement de 1 µm à 500 µm,

Ce tamis permet seulement d'éliminer les particules grossières de la structure des termitières (type cailloux).

Ces particules sont reprises puis de nouveau broyées. En général, plus de 95% (en volume) de la termitière peut être broyée et réduite en poudre.

Si la poudre n'est pas broyée, les particules sont trop grossières et les structures de termitières ne peuvent être réparties de manière homogène dans le substrat.
le rapport inoculum fongique : poudre de termitières étant compris de 0,1% (v:v) à 10 % (v:v), préférentiellement 0,1 (v:v) à 5% (v:v) et plus préférentiellement de 0,1 (v:v) à 1% (v :v)

La composition décrite ci-dessus permet de stimuler la mycorhization notamment des cultures céréalières, fourragères, maraîchères, fruitières ou horticoles.

Selon un mode de réalisation préféré de l'invention, l'inoculum fongique ci-dessus comprend :
i. au moins un champignon endomycorhizien
ii.un support de type sable.
iii.une plante mycotrophe

L' inoculum fongique provient par exemple de la croissance d'une dose de 2g de racines mycorhizées de champignon endomycorhizien;

Cette dose est aussi celle utilisée dans l'invention.

Selon un autre mode de réalisation de l'invention, la susdite composition comprend :
**a.** un inoculum fongique comprenant au moins un champignon endomycorhizien
**b.** de la poudre de termitières,
**c.** un substrat choisi parmi le compost provenant de résidus de culture et préférentiellement de terreau, le sable, ou un mélange de sable et de compost,
   le rapport poudre de termitières : substrat étant compris de 1% (v:v) à 10% (v:v) et préférentiellement de 1% (v:v) à 5% (v:v) et vaut plus préférentiellement de 1% (v:v) et le rapport inoculum fongique : substrat étant compris de 1% (v:v) à 10% (v:v) préférentiellement de 1% (v:v) à 5%(v:v) et valant plus préférentiellement 1% (v:v).

Le terme compost utilisé ici a la même signification que ci-dessus.

L'invention concerne également une composition comprenant :
**a.** un inoculum fongique, comprenant au moins un champignon ectomycorhizien, du genre Pisolithus, notamment choisi parmi Pisolithus albus, Pisolithus tinctorius, ou du genre Scleroderma, notamment choisi parmi Scleroderma dyctiosporum, Scleroderma verrucosum et préférentiellement Scleroderma dictyosporum,
**b.** de la poudre de termitières, la taille des particules de ladite poudre étant comprise de 1µm à 1000 µm préférentiellement de 1µm à 500 µm,
**c.** un substrat choisi parmi le sable, le compost provenant de résidus de culture et préférentiellement de terreau, ou un mélange de sable et de compost,
   le rapport inoculum fongique : poudre de termitières étant compris de 0,1% (v:v) à 10% (v:v), préférentiellement de 0,1% (v:v) à 5% (v:v) et plus préférentiellement de 0,1% (v:v) à 1% (v:v), et
   le rapport inoculum fongique : substrat étant compris de 1% (v:v) à 10% (v:v) préférentiellement de 1% (v:v) à 5% (v:v) et valant plus préférentiellement 1% (v:v), et
   le rapport poudre de termitières : substrat étant compris de 1 % (v:v) à 10% (v:v) et préférentiellement de 1% (v:v) à 5% (v:v) et valant plus préférentiellement 1% (v:v)
sous réserve que l'un moins des deux rapports, inoculum fongique : substrat ou poudre de termitières : substrat, soit inférieur à 10% (v :v) et préférentiellement que l'un au moins des deux susdits rapports soit compris de 1% (v :v) à 5% (v :v).

La composition décrite ci-dessus permet de stimuler la mycorhization des cultures notamment forestières.

Selon un autre mode de réalisation de l'invention, l'inoculum fongique de la composition ci-dessus, comprend:
i. au moins un champignon ectomycorhizien
ii. un support de type tourbe-vermiculite (1 :4, v:v) ou billes d'alginate de calcium.

L'inoculum fongique provient par exemple de la croissance d'une dose de 10 mg de poids sec de biomasse de champignon ectomycorhizien.

L'invention concerne également une composition comprenant :
a. un inoculum fongique comprenant un champignon endomycorhizien du genre Glomus, notamment choisi parmi Glomus mosseae, Glomus fasciculatus, Glomus aggregatum, Glomus intraradices et préférentiellement Glomus intraradices et un champignon ectomycorhizien du genre Pisolithus, notamment choisi parmi Pisolithus albus, Pisolithus tinctorius, ou du genre Scleroderma, notamment choisi parmi Scleroderma dyctiosporum, Scleroderma verrucosum et préférentiellement Scleroderma dictyosporum,
b. de la poudre de termitières, la taille des particules de ladite poudre étant comprise de 1 µm à 1000 µm et préférentiellement de 1 µm à 500µm, le rapport inoculum fongique : poudre étant compris de 0,1 % (v:v) à 10 % (v:v), préférentiellement 0,1% (v:v) à 5 % (v:v), et plus préférentiellement de 0,1 % (v:v) à 1% (v:v).

La composition décrite ci-dessus permet de stimuler la mycorhization des cultures forestières, notamment les essences ligneuses des genres Casuarina, Allocasuarina, Eucalyptus et Acacia d'origine australienne.

Selon un mode de réalisation préféré de l'invention, l'inoculum fongique de la composition ci-dessus comprend:
**i.** au moins un champignon endomycorhizien et un champignon ectomycorhizien,
**ii.** un support de type sable en présence d'une plante mycotrophe pour le champignon endomycorhizien et un support de type tourbe-vermiculite (1 :4, v:v) ou billes d'alginate de calcium pour le champignon ectomycorhizien.

L' inoculum fongique provient par exemple de la croissance d'une dose de 2g de racines mycorhizées de champignon endomycorhizien et par exemple de la croissance d'une dose de 10 mg de poids sec de biomasse de champignon ectomycorhizien.

Selon un mode de réalisation préféré de l'invention, la composition comprend:
a. un inoculum fongique,
b. de la poudre de termitières,
c. un substrat choisi parmi le compost provenant de résidus de culture et préférentiellement de terreau, le sable, ou un mélange de sable et de compost,
   le rapport poudre de termitières : substrat étant compris de 1% (v:v) à 10% (v:v) et préférentiellement de 1% (v:v) à 5% (v:v) et valant plus préférentiellement 1% (v:v) et le rapport inoculum fongique : substrat étant compris de 1% (v:v) à 10% (v:v) préférentiellement de 1 % (v:v) à 5% (v:v) et valant plus préférentiellement 1 % (v:v)

Selon un mode de réalisation préféré, dans toutes les compositions décrites ci-dessus, la poudre de termitières provient de termites du genre *Macrotermes* et préférentiellement du genre *Macrotermes subhyalinus.*

L'invention concerne également un procédé de stimulation de la mycorhization dans des espaces destinés aux cultures, dans lesquelles un mélange d'inoculum fongique et de poudre de termitières, éventuellement broyée, ont été introduits, l'inoculum fongique étant préparé par croissance d'au moins un champignon endomycorhizien avec un support ou par croissance d'au moins un champignon ectomycorhizien sur un support et ledit inoculum étant utilisé à une dose par élément unitaire de culture, notamment graine ou plant, d'environ au moins dix fois inférieure à la dose utilisée en l'absence de poudre de termitières.

L'expression « élément unitaire de culture » désigne ici une graine, semence, grain, fruit, pépin, noyau ou une plante sans être limité à ceux-ci permettant d'obtenir une culture forestière, céréalière, fourragère, maraîchère, fruitière ou horticole.

Selon un mode de réalisation préféré du procédé ci-dessus, la dose d'inoculum. fongique par élément unitaire de culture est comprise de 0,01 à 1 ml et préférentiellement de 0.01 à 0.1 ml.

Selon un autre mode de réalisation préféré de l'invention, l'inoculum utilisé dans le procédé ci-dessus est un inoculum fongique spécifique de l'endomycorhization comprenant au moins un champignon endomycorhizien du genre *Glomus,* notamment choisi parmi *Glomus mosseae, Glomus fasciculatus, Glomus aggregatum, Glomus intraradices* et préférentiellement *Glomus intraradices.*

Selon encore un autre mode de réalisation préféré de l'invention, l'inoculum utilisé dans le procédé ci-dessus est un inoculum fongique spécifique de l'ectomycorhization comprenant au moins un champignon ectomycorhizien du genre *Pisolithus,* notamment choisi parmi *Pisolithus albus, Pisolithus tinctorius,* ou du genre *Scleroderma,* notamment choisi parmi *Scleroderma dyctiosporum, Scleroderma verrucosum* et préférentiellement *Scleroderma dictyosporum.*

Dans un autre mode de réalisation, l'inoculum fongique est un inoculum comprenant au moins un champignon endomycorhizien du genre *Glomus,* notamment choisi parmi *Glomus mosseae, Glomus fasciculatus, Glomus aggregatum, Glomus intraradices* et préférentiellement *Glomus intraradices* et au moins un champignon ectomycorhizien du genre Pisolithus, notamment choisi parmi Pisolithus albus, *Pisolithus tinctorius,* ou du genre *Scleroderma,* notamment choisi parmi *Scleroderma dyctiosporum,* Scleroderma verrucosum et préférentiellement *Scleroderma dictyosporum.*
Selon un mode de réalisation préféré du procédé ci-dessus, la taille des particules de ladite poudre est comprise de 1 µm à 1000 µm et préférentiellement de 1 µm à 500 µm.

Selon un autre mode de réalisation préféré, la poudre de termitières provient de termites du genre *Macrotermes* et préférentiellement du genre *Macrotermes subhyalinus.*

Selon encore un autre mode de réalisation du procédé ci-dessus, un mélange d'inoculum fongique et de poudre de termitières, éventuellement broyée, en association avec un substrat ont été introduits, l'inoculum fongique et la poudre de termitières ayant été mélangés avec un substrat et ledit inoculum fongique étant préparé par croissance d'un champignon mycorhizien sur un support.

Selon un mode de réalisation préféré, le rapport inoculum : poudre de termitières est compris de 0,1 % (v:v) à 10 % (v:v), préférentiellement 0,1 (v:v) à 5% (v:v) et plus préférentiellement de 0,1% (v:v) à 1% (v:v).

Selon un autre mode de réalisation préféré, l'inoculum fongique est préparé par croissance d'au moins un champignon endomycorhizien à la dose d'environ 2g de racines mycorhizées dudit champignon endomycorhizien sur un support constitué de sable en association avec une plante mycotrophe ou par croissance d'au moins un champignon ectomycorhizien à la dose d'environ 10 mg de poids sec de biomasse de champignon ectomycorhizien sur un support constitué de tourbe/vermiculite (1 :4, v:v) ou de billes d'alginate de calcium.

Selon encore un autre mode de réalisation préféré, l'inoculum fongique et la poudre de termitières sont mélangés avec un substrat, ledit substrat étant choisi parmi le sable, le compost provenant de résidus de culture et préférentiellement de terreau, ou un mélange de sable et de compost,
le rapport inoculum fongique : substrat étant compris de 1% (v:v) et 10% (v:v) et préférentiellement 1 % (v:v) et 5% (v:v) et valant préférentiellement 1 % (v:v) et
le rapport poudre de termitières : substrat étant compris de 1% (v:v) et 10% (v:v) et préférentiellement 1% (v:v) )à 5%(v:v) et valant préférentiellement 1% (v :v)

Selon un mode de réalisation préféré, le procédé comporte une étape d'introduction d'un élément unitaire de culture dans des espaces destinés aux cultures contenant préalablement l'inoculum fongique et la poudre de termitières, ledit élément unitaire de culture étant notamment une graine ou un plant.

La graine ou le plant sont introduits dans un espace contenant déjà l'inoculum fongique.

Selon un autre mode de réalisation, le procédé comprend les étapes suivantes:
a. préparation de l'inoculum fongique par croissance d'au moins un champignon endomycorhizien et croissance d'au moins un champignon ectomycorhizien sur un support,
b. mélange de la poudre de termitières, éventuellement broyée, et de l'inoculum fongique avec un substrat,
c. introduction du mélange obtenu à l'étape précédente dans des espaces destinés aux cultures à la dose par élément unitaire de culture de 0,01 à 1ml d'inoculum fongique et préférentiellement de 0.01 à 0.1 ml d'inoculum fongique,
d. introduction d'un élément unitaire de culture, notamment d'une graine à cultiver ou d'un plant, dans les espaces destinés aux cultures contenant le mélange.
Ce procédé comporte une étape de pré-inoculation des plants en terrine dans un volume de sol réduit ce qui procure l'avantage d'éviter les pertes de propagules fongiques habituellement enregistrées dans les techniques classiques de mycorhization.

### DESCRIPTION DES FIGURES

La figure 1 représente l'influence de la proportion de l'amendement en poudre de termitière sur la colonisation mycorhizienne des semis d'*A*. *holosericea* avec les différents traitements d'inoculation mycorhizienne
(A) Inoculation endomycorhizienne (première culture)
   - - - - - - PIF 1%*. y* = 18.53 Ln *x* + 36.9. R = 0.78. p < 0.0001
   -·-·- PIF 5%. *y* = 15.99 Ln x + 27.9. R = 0.61. p = 0.004
   **------**PIF 10%. *y* = 15.45 Ln x+41.48. R = 0.67. p = 0.0012
(B) Inoculation endomycorhizienne (deuxième culture)
   - - - - - - PIF 1%. *y* = 5.73 Ln *x* + 34.7. R = 0.48. p< 0.031
   -·-·- PIF 5%. *y* = 1.69Ln x+67.9. R= 0.14. p= 0.56
   **------**PIF 10%. *y* = 11.9 Ln x + 40.9. R = 0.67. p= 0.005
      PIF : Proportion de l'Inoculum Fongique

   La ligne pleine à 59,3% sur les graphes (A) et (B) représente la colonisation mycorhizienne des semis *A. holosericea* obtenue par inoculation fongique habituellement effectuée dans les pépinières (Tableau 6).
(C) Inoculation ectomycorhizienne (première culture)
   - - - - - - PIF 1%. *y* = 10.98 Ln *x* + 40.8. R = 0.73. p < 0.0003
   -·-·- PIF 5%. *y* =4.26 Ln x + 49.4 R = 0.34.p=0.14
   **------** PIF 10%. *y*=0.64Ln x+49.6.R=0.67.p=0.81
(D) Inoculation ectomycorhizienne (première culture)
   - - - - - - PIF 1.%. *y* = 2.87 Ln *x* + 54.1. R=0.30.p = 0.19
   -·-·- PIF5%. *y* = 4.12Ln x+56.1.R=0.58.p=0.007
   **------**PIF 10%. *y* = 6.3 Ln x + 53.9. R = 0.71. p = 0.0004
      PIF : Proportion de l'inoculum Fongique

La ligne pleine à 35,6% sur les graphes (C) et (D) représente la colonisation mycorhizienne des semis *A. holosericea* obtenue par inoculation fongique habituellement effectuée dans les pépinières (Tableau 6).

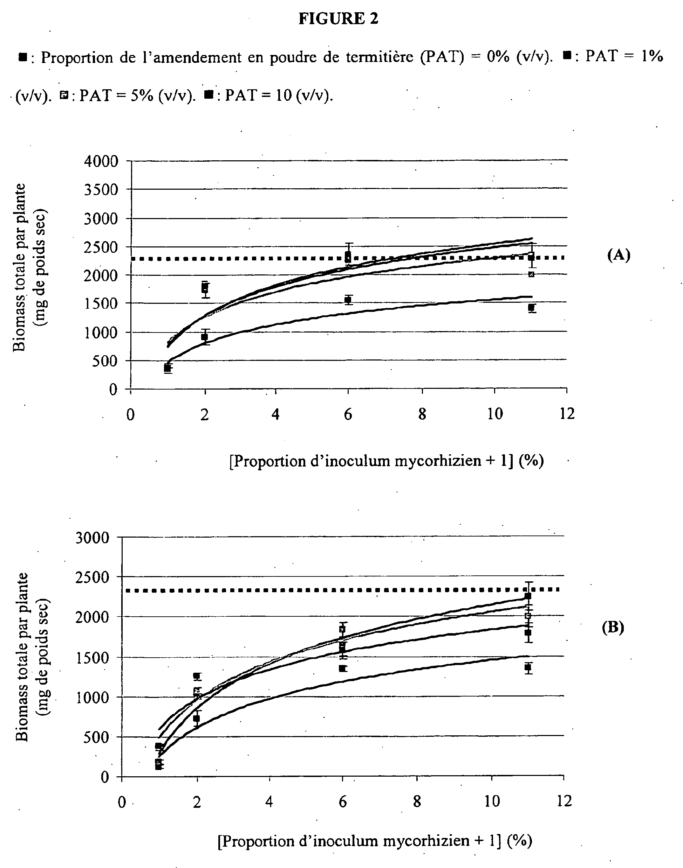

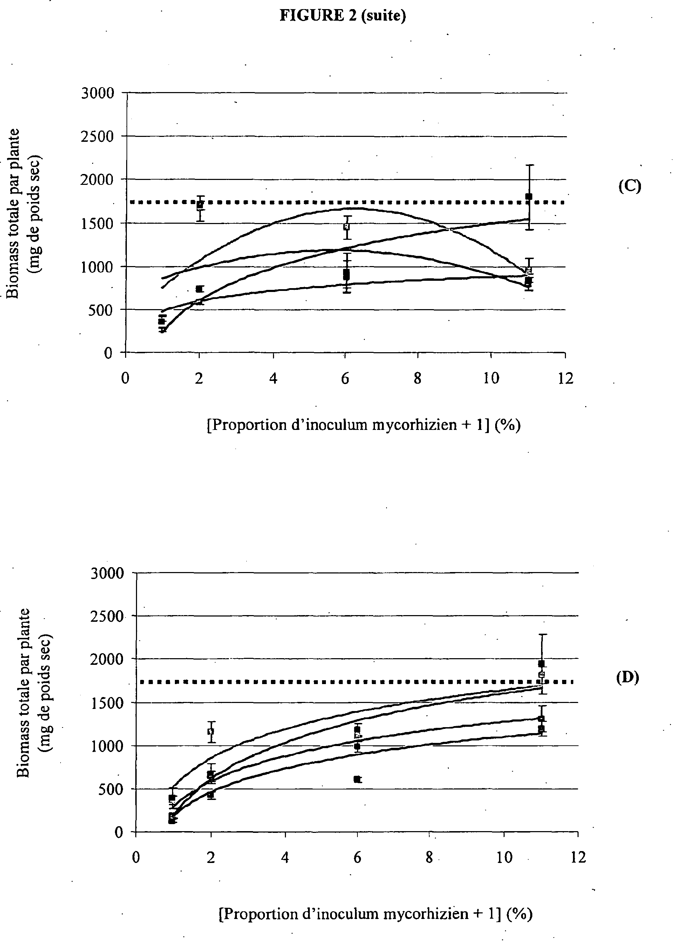

La figure 2 représente l'effet de l'amendement en poudre de termitière sur la croissance des semis d'*A*. *holosericea* avec différentes densités d'inoculum fongique après 4 mois de culture sous serre.
(A) Inoculation endomycorhizienne (première culture)
   **------** PAT = 0%. *y* = 474.6 Ln *x*+464.7. R = 0.87. p<0.0001
   **------** PAT = 1%. *y*= 785.1Ln *x*+ 732.1. R = 0.84. p<0.0001
   **------** PAT = 5%. *y* = 643.9 Ln *x* + 810.5. R = 0.76: p < 0.0001
   **------** PAT = 10%. *y* = 745.6 Ln *x*+ 759. R = 0.79. p<0.0001
(B) Inoculation endomycorhizienne (deuxième culture)
   **------** PAT = 0%. *y*= 522.6 Ln *x* + 246.6. R = 0.93. p < 0.0001
   **------** PAT = 1%. *y*= 803.9 Ln *x* + 293.6. R = 0.84. p < 0.0001
   **------** PAT = 5%. *y* =684.1 Ln *x* + 478.9. R= 0.76. p< 0.0001
   **------** PAT = 10%. *y* = 536.6 Ln *x* + 594.5. R = 0.79. p < 0.0001
      PAT : Proportion de l'amendement en poudre de termitière

   La ligne hachurée à 2380,4 mg représente la biomasse totale des semis d'A. *holosericea* inoculés avec G. *intraradices* (A,B) en utilisant le procédé classique de mycorhization contrôlée. (voir Table 6).
(C) Inoculation ectomycorhizienne (première culture)
   **------** PAT = 0%. *y* = 549.7 Ln *x*+225.9. R = 0.73. p=0.0002
   **------** PAT = 1%.*y*= 174.2 Ln *x*+477.8. R=0.63. p=0.003
   **------** PAT = 5%. *y* = -33.2 x² + 412.7 x + 378.6. R = 0.60. p = 0.02
   **------** PAT=10%.-14.9x² + 168.4 x+710.R = 0.29. p = 0.47
(D) Inoculation ectomycorhizienne (première culture)
   **------** PAT = 0%. *y* = 398.7 Ln *x*+181.3.R = 0.82. p < 0.0001
   **------** PAT = 1%. *y* = 429.7 Ln *x* + 282.4. R = 0.90. p < 0.0001
   **------** PAT = 5%. *y* = 490.7 Ln *x* + 509.9. R = 0.85. p < 0.0001
   **------** PAT = 10%. *y*=617.9Ln *x*+178.1.R=0.79.p<0.0001
      PAT : Proportion de l'amendement en poudre de termitière

La ligne hachurée à 1680,3 mg représente la biomasse totale des semis d'*A*. *holosericea* inoculés avec *P. albus* IR100 (C, D) en utilisant le procédé conventionnel de mycorhization contrôlée. (Voir Table 6).

### EXEMPLES

### Exemple 1 : Analyse des termitières de M. subhyalinus

Les échantillons de termitières de *M. subhyalinus* ont été prélevés dans une savane arbustive, à 50 km au nord de Ouagadougou au Burkina Faso. Ils ont été broyés puis tamisés sur un tamis de 2 mm avant utilisation. Les caractéristiques chimiques et microbiologiques sont présentées dans le tableau I :

**Tableau I. Caractéristiques chimiques et microbiologiques de poudre de termitière de Macrotermes subhyalinus.**

| | |
|---|---|
| NH₄⁺ (µg N g⁻¹ de poudre de termitière sèche) | 9.4 |
| NO₃⁻ (µg N g⁻¹ de poudre de termitière sèche) | 3408.9 |
| P disponible (µg g⁻¹ de poudre de termitière sèche) | 3.5 |
| Biomasse microbienne (µg C g⁻¹ de poudre de termitière sèche) | 22.5 |
| *Pseudomonas* fluorescents(x 10² CFU g⁻¹ de poudre de termitière sèche) | 79.3 |
| Actinomycètes (x 10² CFU g⁻¹ de poudre de termitière sèche) | 39.5 |
| Ergostérol (µg g⁻¹ de poudre de termitière sèche) | 0.316 |

Brièvement, le contenu en NH₄⁺ et NO₃⁻ a été mesuré selon la méthode de Bremner (Bremner J. M., Inorganic forms of nitrogen. Methods of Soil Analysis, Part 2. Agronomy Monographs, Vol. 9, (Black CA, ed.), pp. 1179-1237. Agronomy Society of America and Soil Science Society of America, Madison, WI, (1965)), le phosphore disponible a été déterminé selon Olsen et al. (Olsen SR, Cole CV, Watanabe FS & Dean LA Estimation of available phosphorus in soils by extraction with sodium bicarbonate. Circular, Vol. 939, p. 19. US Department of Agriculture, Washington DC. (1954)). Le contenu en ergostérol a été déterminé en utilisant la méthode de Grand et West (Grant WD &West AW Measurement of ergostérol, diaminopimelic acid and glucosamine in soil: evaluation as indicators of microbial biomass. J Microbiol 6: 47-53, (1986)). La méthode d'extraction-fumigation a été utilisée pour estimer la biomasse microbienne (Amato M & Ladd. JM (1988) Assay for microbial biomass based on ninhydrin-reactive nitrogen in extracts of fumigated soils. Soil Biol Biochem 20: 107-114.). La numération des unité formant des colonies (CFU) a été effectuée sur le milieu gélosé King B pour les *Pseudomonas* fluorescents (King EO,Ward MK & Raney DE (1954) Two simple media for the demonstration of pyocyanine and fluorescein. J Lab Clin Med 44: 301-307) et sur un milieu d'Agar dépourvu d'actinomycètes (Difco Laboratories, Detroit, Mi) pour les actinomycètes. La plupart des *Pseudomonas fluorescent* appartiennent à l'espèce *Pseudomonas monteillii* (Duponnois, R., Assigbetse, K., Ramanankierana, Kisa, M., Thioulouse, J. & Lepage, M. (2006). Litter-forager termite mounds enhance the ectomycorrhizal symbiosis between Acacia holosericea A. Cunn. Ex G. Don and Scleroderma dictyosporum isolates. FEMS Microbiology Ecology, 56: 292-303).

### Exemple 2 : Préparation de l'inoculum fongique

Le champignon ectomycorhizien *P. albus* IR100 a été entretenue sur un milieu d'agar Melin-Norkrans (MMN) à 25°C (Marx, DH (1969) The influence of ectotropic mycorrhizal fungi on the resistance of pine roots to pathogenic infections: I. Antagonism of mycorrhizal fungi to root pathogenic fungi and soil bacteria. Phytopathology 59: 153-163). L'inoculum fongique ectomycorhizien a été préparé selon Duponnois et Garbaye (Duponnois R, Garbaye J (1991) Techniques for controlled synthesis of the Douglas fir-Laccaria laccata ectomycorrhizal symbiosis. Ann Sci For 48:239-251). Des bocaux en verre d'un litre ont été remplis avec 600 ml d'un mélange de vermiculite et de tourbe (4:1; v:v) et autoclave (120°c, 20 min). 300 ml de liquide MMN ont ensuite été ajoutés au substrat, les bocaux ont été scellés et autoclavés à 120°C pendant 20 min. Après refroidissement, le substrat a été inoculé avec des cônes fongiques prélevés à la bordure des colonies fongiques. Les bocaux en verre ont été placés à 25°C dans le noir pendant 3 mois. Un mélange autoclavé de vermiculite-tourbe humidifié (milieu MMN) a été utilisé pour le contrôle sans inoculation ectomycorhizienne.

Le champignon endomycorhizien *G*. *intraradices* (DAOM 181 602, Ottawa Agricultural Herbarium) a été cultivé sur du mil *(Penisetum typhoïdes* cv. IKMV 8201) pendant 12 semaines dans une serre sur un sol de sableux autoclavé (120°C, 60'). L'inoculum endomycorhizien est constitué d'un mélange de sol de rhizosphère contenant des spores, de mycélium et de racines mycorhizées coupée en morceaux de 1 à 3 mm de longueur portant environ 250 vésicules par cm². Des racines de mil non mycorhizées, préparée comme ci-dessus, ont été utilisées pour le contrôle sans inoculation endomycorhizienne.

### Exemple 3 : Conception expérimentale

Des graines de *A. holosericea* ont été stérilisées en surface avec de l'acide sulfurique à 95% pendant 60 min. La solution d'acide a été ensuite décantée et les graines rincées puis plongées pendant 12 dans de l'eau distillée stérile. Les graines ont ensuite été transférées de manière aseptiques dans des boites de Pétri remplies avec 1% (m/v) de milieu agar/eau. Ces boites ont été incubées à 25°C dans le noir. Les graines qui ont germé ont été utilisées lorsque les racines mesuraient de 1 à 2 cm de longueur.

Le sol sableux utilisé dans cette expérience a été collecté dans un peuplement de *A. holoserica* localisé à l'est de Dakar. Après récolte, le sol a été broyé, passé à travers un tamis de 2 mm et autoclavé pendant 60 min à 120°C pour éliminer la microflore native. Après autoclavage, ses caractéristiques physico-chimiques ont été les suivantes : pH (H₂O) 5,3; 3,6% de d'argile; 0,0% de limon fin ; 0,8% de limon grossier ; 55,5% de sable fin ; 39,4% de sable grossier ; 0,17% de carbone ; 0,02% d'azote ; 8,5 C/N ; 39 ppm de P total et 4,8 ppm de P soluble (Olsen SR, Cole CV, Watanabe FS & Dean LA (1954) Estimation of available phosphorus in soils by extraction with sodium bicarbonate. Circular, Vol. 939, p. 19. US Department of Agriculture, Washington DC). Ce sol a été mélangé avec 0, 1,5 et 10% (v/v) de poudre de termitière *M. Subhyalinus.* L'inoculation ectomycorhizienne et endomycorhizienne a été effectuée en mélangeant les sols avec un inoculum fongique (10/1; v/v) avec un mélange autoclavé de vermiculite-tourbe dans le même rapport (contrôle ectomycorhizien) ou avec des racines de mil non mycorhizées et leur sol rhizosphèrique (contrôle endomycorhizien).

Des conteneurs en plastique (30 x 30 x 5cm) remplis avec ces mélanges de sol ont été chacun plantés avec 100 graines germées de *A. holosericea.* Les semis ont été gardés sous serre sous lumière naturelle (approximativement 12h de lumière du jour, température journalière moyenne 30°C) et arrosés sans fertilisants tous les jours. Trois conteneurs par traitement ont été disposés de manière complètement aléatoire.

Après 1 à 2 mois de culture, cinq plantes par conteneur ont été déracinées et transférées dans un pot d'un litre (un semis par pot) rempli avec le même sol stérilisé mais sans amendement de poudre de termitière et inoculation fongique. Les semis ont été conservés dans une serre dans les même conditions que ci-dessus et arrosés quotidiennement sans fertilisant. Les pots ont été disposés de manière complètement aléatoire avec 15 pots par traitement. Après 3 (premier repiquage) et 2 (second repiquage) mois de culture, cinq plantes de *A. holosericea* choisie de manière aléatoire dans chaque traitement ont été déracinées et les systèmes de racine ont été lavés soigneusement. Le poids sec (une semaine. à 65°C) de la plantule a été mesuré. Les systèmes racinaires ont été coupés en morceaux de 1 cm et mélangés. Le pourcentage de racines courtes ectomycorhiziennes ([nombre de racines courtes ectomycorhizienne / nombre total racines courtes ] x 100) a été déterminé sous stéréomicroscope à un grossissement de 40x sur un échantillon aléatoire d'au moins 50 racines courtes par système racinaire. La colonisation interne de champignon endomycorhizien le long des systèmes racinaires a été quantifiée par éclaircissement et coloration des racines suivant la méthode de Phillips et Hayman (Phillips, J.M., Hayman, D.S., 1970. Improved procedures for clearing roots and staining parasitic and vesicular-arbuscular mycorrhizal fungi for rapid assessment of infection. Trans. Br. Mycol. Soc. 55, 158-161). Les morceaux de racines ont été placés sur une lame pour une observation au microscope à un grossissement de 250. (Brundrett, M.C., Piche, Y., Peterson, R.L., 1985. A developmental study of the early stages in vesicular-arbuscular mycorrhizal formation. Can. J. Bot. 63, 184- 194). L'étendue de la colonisation mycorhizienne a été exprimée en termes de fraction de longueur de racine avec des structures internes mycorhiziennes (vésicules ou mycélium): (longueur de fragment de racine colonisé/longueur total de fragments de racine) x 100. puis le poids sec des racines a été mesuré (1 semaine à 65°C).

Parallèlement à cette expérience, des semis *A. holosericea* ont été mis en culture dans des pots de 11 remplis avec le même sol désinfecté que ci-dessus. Pour l'inoculation ectomycorhizienne, le sol a été mélangé avec un inoculum fongique de *P. albus* IR 100 (10/1; v/v). Le contrôle (sans champignon), a reçu un mélange autoclavé de vermiculite-tourbe humide (milieu MMN) dans un même rapport. Pour l'inoculation endomycorhizienne, un trou (1cm x 5 cm) a été effectué dans chaque pot et rempli avec un gramme de racine de mil frais (mycorhizées ou non pour le traitement contrôle sans champignon). Les trous ont été ensuite couverts avec le même sol autoclavé: Les plantes ont été quotidiennement arrosées sans fertilisant et disposées de manière complètement aléatoire avec huit échantillons par traitement. Ils ont été conservés sous serre sous lumière naturelle (approximativement 12h de lumière du jour, température moyenne journalière 30°C). Après 4 mois de culture, les plantes de *A. holosericea* ont été déracinées et leurs biomasses aérienne et racinaire, leurs index mycorhiziens ont été mesurés comme décrit précédemment.

### Exemple 4 : Analyse statistique

Les données ont été traitées avec une analyse de variance à une variable ou deux variables. Les moyennes ont été comparées en utilisant le test de Newman et Keuls (p<0,05). Les pourcentages de colonisation mycorhizienne ont été transformés par arc sin (sqrt) avant l'analyse statistique.

### Exemple 5: Résultats

### Effets de l 'inoculation fongique endomycorhizienne et de l'amendement en poudre de termitière sur la croissance des plantes et la colonisation mycorhizienne de semis d'A. holosericea.

Pour toutes les proportions d'inoculum fongiques combinées et pour les deux traitements de cultures, il y a des différences significatives entre la biomasse aérienne et racinaire et la colonisation mycorhizienne de semis d'A. *holosericea* (tableaux 2 et 3).

**Tableau 2. Effet des proportions en inoculation endomycorhizienne et d'amendement en poudre de termitière sur la croissance d'A. holosericea et sur la formation mycorhizienne après 3 mois de culture dans des pots de 1 litre (Première plantation).**

| Facteur ^{(A)} | Biomasse aérienne (mg de poids sec) | Biomasse des racines (mg de poids sec) | Colonisation mycorhizienne (%) |
|---|---|---|---|
| *Proportion de l'inoculum fongique (%)* | | | |
| 0 | 278.5 (26.8) ⁽¹⁾ a⁽²⁾ | 62.5 (8.9) a | 0 a |
| 1 | 1215.1 (89.1) b | 350.5 (31.9) b | 59.5 (5.1) c |
| 5 | 1580 (73.1) c | 520.1 (34.1) d | 47.5 (5.6) b |
| 10 | 1550 (88.8) c | 444.1 (43.3) c | 60.7 (4.9) c |
| *Proportion de l'amendement en poudre de termitière (%)* | | | |
| 0 | 838.5 (90.9) a | 205.5 (36.2) a | 18.0 (4.4) a |
| 1 | 1261.5 (146.8) b | 429.0 (55.1) b | 47.5 (6.8) b |
| 5 | 1218.5 (136.9) b | 378.2 (48.2) b | 49.2 (7.1) b |
| 10 | 1305.5 (156.2) b | 364.5 (48.2) b | 53.1 (7.4) b |
| Proportion de l'inoculum Fongique (PIF) | S | S | S |
| Proportion de l'amendement en poudre de termitière (PAT) | S | S | S |
| PIF x PAT | NS | S | S |

| | | | |
|---|---|---|---|
| S: significatif (p< 0.05),NS: non significatif (p< 0.05). ⁽¹⁾ Erreur Standard sur la moyenne. ⁽²⁾ Les données dans la même colonne et pour chaque facteur suivies par la même lettre ne sont pas significativement différentes selon le test Newman-Keuls (p < 0.05). ^{(A)} Les valeurs sont les moyennes de 20 échantillons pour les proportions d'inoculum fongique et d'amendement en poudre de termitières. Le facteur de proportion d'inoculum fongique est combiné pour tous les traitements des proportions d'amendement de poudre de termitières. Le facteur d'amendement de poudre de termitières est combiné pour tous les traitements de proportion d'inoculum fongique. | | | |

**Tableau 3. Effet des proportions en inoculation endomycorhizienne et d'amendement en poudre de termitière sur la croissance d'A. holosericea et sur la formation mycorhizienne après 2 mois de culture dans des pots de 1 litre (Seconde plantation).**

| Facteur ^{(A)} | Biomasse aérienne (mg de poids sec) | Biomasse des racines (mg de poids sec) | Colonisation mycorhizienne (%) |
|---|---|---|---|
| *Proportion de l' inoculum fongique (%)* | | | |
| 0 | 190.1 (22.6) ⁽¹⁾ a ⁽²⁾ | 70.5 (8.5) a | 0 a |
| 1 | 783.5 (41.5) b | 238.1 (18.4) b | 41.8 (2.5) b |
| 5 | 1236.1 (48.9) c | 357.1 (20.3) c | 70.1 (2.6) d |
| 10 | 1510.1 (73.9) d | 334.5 (35.9) c | 55.5 (4.3) c |
| | | | |
| *Proportion de l'amendement en poudre de termitière* (%) | | | |
| 0 | 709.6 (101.1) a | 175.0 (25.6) a | 31.0 (5.3) a |
| 1 | 1000.5 (142.9) b | 274.5 (43.3)b | 47.3 (7.3) b |
| 5 | 1019.5 (125.2) b | 294.5 (30.7) b | 41.5 (6.4) b |
| 10 | 988.5 (113.4) b | 256.1 (29.9) ab | 47.5 (6.6) b |
| | | | |
| Proportion d'inoculum Fongique (PIF) | S | S | S |
| Proportion de l'amendement en poudre de termitière (PAT) | S | S | S |
| PIF x PAT | NS | S | S |

| | | | |
|---|---|---|---|
| Pour les légendes, voir le tableau 2. | | | |

Comparés au contrôle, les biomasses et l'index de colonisation mycorhizienne les plus élevés ont été trouvés avec la proportion d'inoculum fongique de 10% dans la première expérimentation de culture (voir tableau 2) tandis que, dans l'expérience de deuxième culture, la plus forte colonisation mycorhizienne a été enregistrée avec le taux d'inoculum fongique de 5% (voir tableau 3).

Pour toutes les proportions combinées d'amendement de poudre de termitières dans la première expérience de culture, la croissance et la colonisation mycorhizienne ont été beaucoup plus élevées dans les sols inoculés en poudre de termitière comparé au témoin excepté pour les biomasses de racines pour la proportion d'amendement de poudre de termitières de 10% (voir tableau 2).

Dans la seconde expérience de culture, aucune différence importante n'a été trouvée entre les différents traitements d'inoculation pour les biomasses de racines mais l'effet positif de la poudre de termitière sur la colonisation mycorhizienne a été maintenue (voir tableau 3). La biomasse aérienne la plus élevée d'*A*. *holosericea* a été enregistrée dans les proportions d'amendement en poudre de termitière à 5% (voir tableau 3). Des interactions significatives entre les inoculations fongiques et les amendements en poudre de termitières ont été trouvées pour les biomasses de racines et la colonisation mycorhizienne dans les deux traitements de culture (voir tableau 2 et 3).

### Effets de l'amendement en inoculation fongique ectomycorhizienne et en poudre de termitière sur la croissance de la plante et la colonisation mycorhizienne de semis d'A. holosericea.

L'inoculation ectomycorhizienne a augmenté de façon significative la croissance et la colonisation mycorhizienne de semis d'*A*. *holosericea* dans les deux expériences de cultures (tableaux 4 et 5).

**Tableau 4. Effet des proportions en inoculation ectomycorhizienne et d'amendement en poudre de termitière sur la croissance d'A. holosericea et sur la formation mycorhizienne après 3 mois de culture dans des pots de 1 litre (Première plantation).**

| Facteur ^{(A)} | Biomasse aérienne (mg de poids sec) | Biomasse des racines (mg de poids sec) | Colonisation mycorhizienne (%) |
|---|---|---|---|
| *Proportion de l'inoculum fongique (%)* | | | |
| 0 | 278.5 (26.8) ⁽¹⁾ a ⁽²⁾ | 62.5 (8.9) a | 0 a |
| 1 | 830.5 (101.9) b | 341.5 (29.4) c | 54.2 (3.2) b |
| 5 | 771.0 (79.8) b | 261.5 (25.7) b | 54.6 (2.7) b |
| 10 | 813.5 (104.9) b | 277.5 (31.9) bc | 50.4(2.4)b |
| | | | |
| *Proportion de l'amendement en poudre de termitière (%)* | | | |
| 0 | 658.5 (122.5) b | 288.5 (42.1) a | 33.5 (4.8) a |
| 1 | 482.5 (44.9) a | 208.0 (23.6) a | 39.6 (5.4) b |
| 5 | 830.1 (101.3) c | 268.1 (35.4) a | 42.6 (6.3) b |
| 10 | 722.5 (93.6) bc | 228.0 (35.3) a | 43.6 (6.3) b |
| | | | |
| Proportion de l'inoculum Fongique (PIF) | S | S | S |
| Proportion de l'amendement en poudre de termitière (PAT) | S | NS | S |
| PIF x PAT | S | S | S |

| | | | |
|---|---|---|---|
| Pour les légendes, voir le tableau 2. | | | |

**Table 5. Effet des proportions en inoculation ectomycorhizienne et d'amendement en poudre de termitière sur la croissance d'A. holosericea et sur la formation mycorhizienne après 2 mois de culture dans des pots de 1 litre (Seconde plantation).**

| Facteur ^{(A)} | Biomasse aérienne (mg de poids sec) | Biomasse des racines (mg de poids sec) | Colonisation mycorhizienne (%) |
|---|---|---|---|
| *Proportion de l'inoculum fongique (%)* | | | |
| 0 | 191.0 (27.9) ⁽¹⁾ a ⁽²⁾ | 74.5 (12.9) a | 0 a |
| 1 | 556.5 (61.4) b | 166.1 (15.2) b | 57.6 (2.1) b |
| 5 | 745.5 (43.6) c | 221.1 (17.4) c | 61.1 (1.5) c |
| 10 | 1197.5 (96.6) d | 364.5 (27.1) d | 61.6 (1.9) c |
| *Proportion de l'amendement en poudre de termitière (%)* | | | |
| 0 | 501.0 (77.1) a | 167.0 (27.4) a | 41.1 (5.5) a |
| 1 | 612.2 (78.1) ab | 195.0 (30.2) ab | 41.6 (5.6) a |
| 5 | 858.6 (96.9) c | 250.5 (27.8) b | 51.2 (6.8) c |
| 10 | 719.1 (135.5) bc | 213.5 (33.6) b | 46.3 (6.4) b |
| | | | |
| Proportion de l'inoculum Fongique (PIF) | S | S | S |
| Proportion de l'amendement en poudre de termitière (PAT) | S | S | S |
| PIF x PAT | S | S | S |

| | | | |
|---|---|---|---|
| Pour les légendes, voir le tableau 2. | | | |

Dans la première expérience de culture, un effet positif significatif de l'inoculation fongique a été trouvé sur la croissance et la colonisation mycorhizienne de semis d'*A. holosericea* (tableau 4). La croissance des racines a été beaucoup plus importante quand les plantes ont été inoculées au taux de 1% (voir tableau 4). Dans le traitement de deuxième culture, la biomasse aérienne et racinaire la plus élevée a été enregistrée avec la proportion d'inoculum fongique de 10% (tableau 5).

L'amendement du sol avec la poudre de termitière n'a eu aucun effet significatif sur la croissance des racines tandis que cela a augmenté significativement la colonisation mycorhizienne des semis dans la première expérience de culture (voir tableau 4). Comparé au contrôle (sol sans poudre de termitière), la croissance des racines a été significativement plus faible pour l'amendement de poudre de termitière à 1% et plus élevée pour l'amendement de poudre de termitière à 5% (tableau 4).

Dans la seconde expérience de culture, les effets positifs sur la croissance de la plante et la colonisation mycorhizienne ont seulement été trouvés dans les traitements à 5 et 10% de poudre de termitière (voir tableau 5). Des interactions significatives entre les inoculations fongiques et les amendements en poudre de termitières ont été trouvées pour les biomasses de racines et la colonisation mycorhizienne dans les deux traitements de culture (voir tableaux 4 et 5).

### Effets de l'inoculation fongique et de l'amendement en poudre termitière sur la colonisation mycorhizienne de semis d'A holosericea.

En utilisant le procédé classique de mycorhization contrôlée et après 4 mois de croissance, les inoculations fongiques endomycorhiziennes et ectomycorhiziennes ont augmenté significativement la biomasse aérienne (respectivement : +64.7% et + 50.9%) et la biomasse des racines (respectivement : +42.8% et +48.2%) (tableau 6). Les taux de colonisation mycorhizienne de semis *A. holosericea* ont été de 59.3% pour le traitement endomycorhizien et de 35.6% pour le traitement ectomycorhizien (voir tableau 6).

**Tableau 6. Effet des inoculations ectomycorhiziennes et endomycorhiziennes sur la croissance d' A. holosericea et sur la formation mycorhizienne après 4 mois de culture sous serre avec le procédé conventionnel de mycorhization contrôlée**

| Traitements | Biomasse aérienne (mg de poids sec) | Biomasse des racines (mg de poids sec) | Colonisation mycorhizienne (%) |
|---|---|---|---|
| **Inoculation endomycorhizienne** | | | |
| Témoin | 648.1 a ⁽¹⁾ | 312.2 a | 0 |
| *Glomus intraradices* | 1834.1 b | 546.3 b | 59.3 |
| | | | |
| **Inoculation ectomycorhizienne** | | | |
| Témoin | 550 a | 290 a | 0 |
| *Pisolithus albus* IR100 | 1120.1 b | 560.2 b | 35.6 |

| | | | |
|---|---|---|---|
| ⁽¹⁾ Pour chaque type d'inoculation fongique, les données dans la même colonne suivies par la même lettre ne sont pas significativement différentes selon le test de Newman Keuls (*p* < 0.05). | | | |

### Relations entre l'amendement en poudre de termitière, l'inoculation fongique et la formation mycorhizienne.

Dans les deux expériences de culture, la colonisation endomycorhizienne a augmenté avec des taux croissants d'amendement en poudre de termitière excepté pour l'inoculum mycorhizien à 5% dans la deuxième expérience de culture (voir Figure 1 et 2).

Dans le traitement de première culture, la colonisation endomycorhizienne obtenue avec le procédé classique de mycorhization contrôlée (59.3%) (tableau 6) a été atteinte pour tous les taux de traitements mycorhiziens quand l'inoculation fongique a été associée avec 5% et 10% d'amendements en poudre de termitières et pour les amendements à 1% en poudre de termitière lorsqu'ils ont été associés à un traitement d'inoculation endomycorhizienne à 1 et 10% (Figure 1A).

Dans le second traitement de culture, la colonisation mycorhizienne de 59.3% a été atteinte pour tous les traitements endomycorhiziens avec un amendement en poudre de termitière de 10% et dans les traitements avec un amendement en poudre de termitière de 5% pour une inoculation endomycorhizienne de 5% et 10% (figure 1B). Aucun liens significatif n'a été trouvé entre la colonisation mycorhizienne et les taux d'amendement de poudre de termitière dans les traitements d'inoculation endomycorhizienne à 5% (voir figure 1B).

Pour l'inoculation ectomycorhizienne et dans la première expérience de culture, les index mycorhiziens étaient égaux ou plus élevés que ceux obtenus avec le procédé classique de mycorhization contrôlée (35.6%) (Figure 1C). La colonisation mycorhizienne a été positivement liée à un amendement en poudre de termitière croissant pour un traitement d'inoculation ectomycorhizienne à 1 % (voir figure 1C).

Dans la deuxième expérience de culture, la colonisation mycorhizienne des semis d'*A*. *holosericea* a été significativement plus élevée, pour tous les traitements fongiques, que ceux obtenus avec la méthode classique (Figure 1D). Les taux d' ectomycorhization ont été corrélés pour les proportions d'amendement en poudre de termitières avec les proportions d'inoculum ectomycorhiziens à 5% et 10% (figure 1D).

### Relations entre l'amendement en poudre de termitière, l'inoculation fongique et la croissance des plantes.

Pour les traitements d'inoculation endomycorhizienne, la croissance des plantes a été corrélée de façon significative pour les quantités de propagules mycorhiziennes inoculées dans le sol avec ou sans poudre de termite pour les deux traitements de culture (figure 2A et B).

Quand les poudres de termitières ont été ajoutées, la croissance des plantes a été significativement augmentée et a atteint celle obtenue avec le procédé classique d'inoculation mycorhizienne (biomasse totale = 2380.3 mg de poids sec) pour le traitement de l'inoculum fongique à 10% endomycorhizien avec les amendements en poudre de termitière à 1%, 5% et 10% dans la première expérience de culture (figure 2A) et avec des amendements en poudre de termitière à 1% et 5% dans la deuxième expérience de culture (figure 2B).

Pour les traitements d'inoculation ectomycorhizienne, la croissance des plantes à été corrélée avec les taux d'inoculation mycorhizienne exceptée pour le traitement fongique à 10% associé à un amendement de poudre de termitière à 10% dans le traitement de la première culture (figure 2C et 2D).

Le poids total sec des semis d'*A*. *holosericea* classiquement inoculés avec *P*. albus IR100 (biomasse totale = 1680.2 mg poids sec) a été atteint pour les traitements par l'inoculum fongique à 10% avec des amendements en poudre de termitière à 1% et 10% dans la deuxième expérimentation de culture (figure 2D) mais n'a été atteint que pour le traitement par l'inoculum fongique à 5% avec un amendement de poudre de termitière à 5% dans la première expérience de culture aussi bien que pour le sol sans *P. albus* IR100 mais amendé avec 10% de poudre de termitière (figure 2C).

### Exemple 6: Conclusion

Les objectifs principaux de cette expérimentation étaient de tester l'effet d'un amendement de poudre de termitière de *Macrotermes subhyalinus* sur la formation de mycorhizes entre *A. holosericea* et un isolat de *P. albus* (*P. albus* IR100) et de *Glomus intraradices* en utilisant un système de culture divisé en deux étapes de manière à minimiser les quantités d'inocula fongique additionné au substrat de culture. La première étape de cette pratique culturale a été effectuée pour inoculer les semis d'*A*. *holosericea* tandis que la seconde a permis le développement de ces plants mycorhizés dans des volumes de sol plus grand.

Dans la présente étude, l'amendement de termitière a augmenté de manière significative la formation mycorhizienne des deux isolats fongiques. Les quantités de poudre de termitière ajoutées au sol, dans la plus petite proportion (1%, v/v), induisent une augmentation significative de la formation mycorhizienne. Cet effet positif a été effectué avec seulement 7,9 10³ CFU par litre de substrat de culture (environ 7 bactéries par gramme de sol). Cette étude montre également une interaction significative entre les doses fongiques et les taux d'amendement en termitière.

Tous ces résultats suggèrent que l'utilisation de la poudre de termitière telle que *M. Subhyalinus,* qui contient quelques MHB (« Mycorrhiza Helper Bacteria »), fournit un outil d'inoculum bénéfique pour le développement de ces bactéries en protégeant les cellules bactériennes de facteurs environnementaux nuisibles.

Dans la plupart des traitements fongiques décrits dans cette étude, l'effet stimulant de l'amendement de poudre de termitière sur la formation mycorhizienne a été associé avec une augmentation de la croissance de la plante. Ceci suggère que l'amendement de poudre de termitière n'interagit pas avec l'efficacité de la symbiose mycorhizienne.

Un des problèmes rencontrés dans la mycorhization contrôlée classique des plantations de forêts réside dans la grande quantité d'inoculum fongique nécessaire pour la production de plants mycorhizés de haute qualité dans des conditions de pépinières.

Dans les zones tropicales et Méditerranéennes, la dose d'inoculum mycorhizien ajoutée par plant au substrat de culture est généralement de 1 litre par litre de sol (inoculation ectomycorhizienne) et de 1 gramme en poids frais de racines mycorhiziennes par litre de sol (inoculation endomycorhizienne) (Duponnois, R., Plenchette, C., Prin, Y., Ducousso, M., Kisa, M., Bâ, A.M. & Galiana, A. (2007). Use of mycorrhizal inoculation to improve reafforestation process with Australian Acacia in Sahelian ecozones. Ecological Engineering, 29: 105-112).

Avec le procédé de l'invention, ces quantités sont drastiquement réduites puisque, avec seulement 450 ml d'inoculum ectomycorhizien ou endomycorhizien (mélange de spores, racines mycorhiziennes et sol de rhizosphère), environ 100 plantes d'*A*. *holosericea* peuvent être produits avec la même croissance-et colonisation mycorhizienne que des plants mycorhizés produits par le procédé classique de mycorhization.

Par conséquent, les coûts d'inoculation peuvent être fortement réduits puisque les termitières sont communément trouvées dans les écosystèmes et puisque les quantités fongiques requises sont très faibles.

Cette technique d'inoculation peut être utile pour la reforestation des régions tropicales étant donné qu'il est bien connu que la mycorhization contrôlée est un outil bénéfique pour augmenter la survie et la productivité des variétés d'arbres dans les zones dégradées.

## Revendications

1. Utilisation d'au moins un inoculum fongique constitué d'un ou plusieurs champignon endomycorhizien et/ou ectomycorhizien, et de poudre de termitières, en tant qu'agent stimulant la mycorhization de cultures notamment forestières, céréalières, fourragères, maraîchères, fruitières ou horticoles, ledit inoculum étant utilisé à une dose par graine ou plant, d'environ au moins dix fois inférieure à la dose utilisée en l'absence de poudre de termitières, la dose étant de 0,01 à 1 ml d'inoculum fongique et préférentiellement de 0.01 à 0.1 ml d'inoculum fongique et le rapport inoculum : poudre de termitières étant compris de 0,1 % (v:v) à 10 % (v:v), préférentiellement 0,1 %(v:v) à 5% (v:v) et plus préférentiellement de 0,1 % (v:v) à 1% (v:v).

2. Utilisation selon la revendication 1, dans laquelle la poudre de termitières provient de termites du genre *Macrotermes* et préférentiellement du genre *Macrotermes subhyalinus.*

3. Utilisation selon l'une des revendications 1 ou 2, dans laquelle l'inoculum fongique est constitué d'un ou plusieurs champignon endomycorhizien, du genre *Glomus,* notamment choisi parmi *Glomus mosseae, Glomus fasciculatus, Glomus aggregatum, Glomus intraradices* et préférentiellement *Glomus intraradices.*

4. Utilisation selon l'une des revendications 1 ou 2, dans laquelle l'inoculum fongique est constitué d'un ou plusieurs champignon ectomycorhizien, du genre *Pisolithus,* notamment choisi parmi *Pisolithus albus, Pisolithus tinctorius,* ou du genre *Scleroderma,* notamment choisi parmi *Scleroderma dyctiosporum, Scleroderma verrucosum* et préférentiellement *Scleroderma dictyosporum,*

5. Utilisation selon l'une des revendications 1 ou 2, dans laquelle l'inoculum fongique est constitué d'un ou plusieurs endomycorhizien du genre *Glomus,* notamment choisi parmi *Glomus mosseae, Glomus fasciculatus, Glomus aggregatum, Glomus intraradices* et préférentiellement *Glomus intraradices* et d'un ou plusieurs champignon ectomycorhizien du genre *Pisolithus,* notamment choisi parmi *Pisolithus albus, Pisolithus tinctorius,* ou du genre *Scleroderma,* notamment choisi parmi *Scleroderma dyctiosporum, Scleroderma verrucosum* et préférentiellement *Scleroderma dictyosporum,*

6. Utilisation selon l'une des revendications 1 à 5, dans laquelle l'inoculum fongique est préparé par croissance d'un champignon endomycorhizien sur un support, notamment en présence d'une plante mycotrophe, notamment de type sable, ou croissance d'un champignon ectomycorhizien sur un support de type tourbe-vermiculite ou de billes d'alginate de calcium.

7. Utilisation selon l'une des revendications 1 à 6, dans laquelle l'inoculum fongique et la poudre de termitières sont associés à un substrat, notamment choisi parmi le sable, le compost provenant de résidus de culture et préférentiellement de terreau, ou un mélange de sable et de compost.

8. Utilisation selon l'une des revendications 1 à 7, dans laquelle le rapport inoculum fongique : substrat de l'inoculum est compris de 1% (v:v) à 10% (v:v), préférentiellement de 1 % (v:v) à 5% (v:v) et vaut plus préférentiellement 1 % (v:v).

9. Utilisation selon l'une des revendications 1 à 8, dans laquelle le rapport poudre de termitières : substrat de l'inoculum est compris de 1% (v:v) à 10% (v:v) et préférentiellement de 1 % (v:v) à 5% (v:v) et vaut plus préférentiellement 1 % (v:v).

10. Utilisation selon l'une des revendications 1 à 3 et 6 à 9, notamment de champignon endomycorhizien, dans des espaces destinés aux cultures, notamment céréalières, fourragères, maraîchères, fruitières ou horticoles et préférentiellement maraîchères, fruitières ou horticoles.

11. Utilisation selon l'une des revendications 1 ou 2 et 4 à 9, notamment de champignon ectomycorhizien, dans des espaces destinés aux cultures forestières.

12. Utilisation selon l'une des revendications 1 à 9, notamment de champignon endomycorhizien et ectomycorhizien, dans des espaces destinés aux cultures forestières, notamment les essences ligneuses des genres Casuarina, Allocasuarina, Eucalyptus et Acacia d'origine australienne.

13. Composition comprenant au moins un inoculum fongique constitué d'un ou plusieurs champignon endomycorhizien et/ou ectomycorhizien, et de la poudre de termitières, le rapport inoculum : poudre de termitières étant compris de 0,1 % (v:v) à 10 % (v:v), préférentiellement 0,1 %(v:v) à 5% (v:v) et plus préférentiellement de 0,1% (v:v) à 1% (v:v).

14. Composition selon la revendication 13, comprenant :
**a**. un inoculum fongique constitué d'un ou plusieurs champignon endomycorhizien du genre *Glomus* tel que défini dans la revendication 3,
**b**. de la poudre de termitières telle que définie dans la revendication 2, la taille des particules de ladite poudre de termitières étant comprise de 1 µm à 1000 µm et préférentiellement de 1 µm à 500 µm,
le rapport inoculum fongique : poudre de termitières étant compris de 0,1 % (v:v) à 10 % (v:v), préférentiellement 0,1 (v:v) à 5% (v:v) et plus préférentiellement de 0,1 (v:v) à 1% (v :v)

15. Composition selon la revendication 13 ou 14, dans laquelle l'inoculum fongique est constitué de:
**i**. un ou plusieurs champignon endomycorhizien résultant par exemple de la croissance d'une dose d'environ 2g de racines mycorhizées dudit champignon endomycorhizien,
**ii**. un support de type sable,
**iii**. une plante mycotrophe

16. Composition selon l'une des revendications 13 à 15, comprenant :
**a**. un inoculum fongique constitué d'un ou plusieurs champignon endomycorhizien,
**b**. de la poudre de termitières,
**c**. un substrat choisi parmi le compost provenant de résidus de culture et préférentiellement de terreau, le sable, ou un mélange de sable et de compost, le rapport poudre de termitières : substrat étant compris de 1% (v:v) à 10% (v:v ) et préférentiellement de 1% (v:v) à 5% (v:v) et vaut plus préférentiellement de 1% (v:v) et le rapport inoculum fongique : substrat étant compris de 1% (v:v) à 10% (v:v) préférentiellement de 1% (v:v) à 5%(v:v) et valant plus préférentiellement 1% (v:v).

17. Composition selon la revendication 13, comprenant:
a. un inoculum fongique constitué d'un ou plusieurs champignon ectomycorhizien, du genre *Pisolithus* tel que défini dans la revendication 4,
b. de la poudre de termitières telle que définie dans la revendication 2, la taille des particules de ladite poudre étant comprise de 1 µm à 1000 µm préférentiellement de 1 µm à 500 µm,
**c**. un substrat tel que défini dans la revendication 7,
le rapport inoculum fongique : poudre de termitières étant compris de 0,1 % (v:v) à 10% (v:v), préférentiellement de 0,1% (v:v) à 5% (v:v) et plus préférentiellement de 0, 1 % (v:v) à 1% (v:v), et
le rapport inoculum fongique : substrat étant compris de 1% (v:v) à 10% (v:v) préférentiellement de 1% (v:v) à 5% (v:v) et valant plus préférentiellement 1% (v:v), et
le rapport poudre de termitières : substrat étant compris de 1% (v:v) à 10% (v:v) et préférentiellement de 1% (v:v) à 5% (v:v) et valant plus préférentiellement 1% (v:v)
sous réserve qu'au moins l'un des deux rapports, inoculum fongique : substrat ou poudre de termitières : substrat, soit inférieur à 10% (v :v) et préférentiellement que l'un au moins des deux susdits rapports soit compris de 1% (v :v) à 5% (v :v).

18. Composition selon la revendication 17, dans laquelle l'inoculum fongique, est constitué de:
**i**. un ou plusieurs champignon ectomycorhizien, résultant par exemple de la croissance d'une dose de 10 mg de poids sec de biomasse de champignon ectomycorhizien.
**ii**. un support de type tourbe-vermiculite (1 :4, v:v) ou billes d'alginate de calcium.

19. Composition selon l'une des revendications 13 à 16 comprenant :
**a.** un inoculum fongique constitué d'un champignon endomycorhizien du genre *Glomus* tel que défini dans la revendication 3, et un champignon ectomycorhizien du genre *Pisolithus* tel que défini dans la revendication 4,
**b.** de la poudre de termitières telle que définie dans la revendication 2, la taille des particules de ladite poudre étant comprise de 1 µm à 1000 µm et préférentiellement de 1 µm à 500µm,
le rapport inoculum fongique : poudre étant compris de 0,1 % (v:v) à 10 % (v:v), préférentiellement 0,1 % (v:v) à 5 % (v:v), et plus préférentiellement de 0,1 % (v:v) à 1% (v :v).

20. Composition selon la revendication 19, dans laquelle l'inoculum fongique, est constitué de:
**i.** d'un ou plusieurs champignon endomycorhizien résultant par exemple de la croissance d'une dose d'environ 2g de racines mycorhizées dudit champignon endomycorhizien et un champignon ectomycorhizien résultant par exemple de la croissance d'une dose de 10 mg de poids sec de biomasse de champignon ectomycorhizien,
**ii.** un support de type sable en association avec une plante mycotrophe pour le champignon endomycorhizien et un support de type tourbe-vermiculite (1 :4, v:v) ou billes d'alginate de calcium pour le champignon ectomycorhizien.

21. Composition selon l'une des revendications 19 ou 20, comprenant :
**a.** un inoculum fongique,
**b.** de la poudre de termitières,
**c.** un substrat choisi parmi le compost provenant de résidus de culture et préférentiellement de terreau, le sable, ou un mélange de sable et de compost, le rapport poudre de termitières : substrat étant compris de 1% (v:v) à 10% (v:v) et préférentiellement de 1% (v:v) à 5% (v:v) et valant plus préférentiellement 1% (v:v) et le rapport inoculum fongique : substrat étant compris de 1% (v:v) à 10% (v:v) préférentiellement de 1% (v:v) à 5% (v:v) et valant plus préférentiellement 1% (v:v)

22. Composition selon l'une des revendications 13 à 21, dans laquelle la poudre de termitières provient de termites du genre *Macrotermes* et préférentiellement du genre *Macrotermes subhyalinus.*

23. Procédé de stimulation de la mycorhization dans des espaces destinés aux cultures, comprenant une étape d'introduction d'un mélange d'au moins un inoculum fongique constitué d'un ou plusieurs champignon endomycorhizien et/ou ectomycorhizien et de poudre de termitières, éventuellement broyée, tels que définis dans la revendication 1, le rapport inoculum : poudre de termitières étant compris de 0,1 % (v:v) à 10 % (v:v), préférentiellement 0,1 %(v:v) à 5% (v:v) et plus préférentiellement de 0,1% (v:v) à 1% (v:v), après une étape de préparation de l'inoculum fongique par croissance d'au moins un champignon endomycorhizien avec un support ou par croissance d'au moins un champignon ectomycorhizien sur un support et ledit inoculum étant utilisé à une dose par graine ou plant, d'environ au moins dix fois inférieure à la dose utilisée en l'absence de poudre de termitières, de 0,01 à 1 ml d'inoculum fongique et préférentiellement de 0.01 à 0.1 ml d'inoculum fongique.

24. Procédé selon la revendication 23, dans lequel la dose d'inoculum fongique par élément unitaire de culture est comprise de 0,01 à 1 ml et préférentiellement de 0.01 à 0.1 ml.

25. Procédé selon l'une des revendications 23 ou 24, dans lequel l'inoculum fongique est un inoculum fongique spécifique de l'endomycorhization constitué d'un ou plusieurs champignon endomycorhizien du genre *Glomus,* notamment choisi parmi *Glomus mosseae, Glomus fasciculatus, Glomus aggregatum, Glomus intraradices* et préférentiellement *Glomus intraradices*

26. Procédé selon l'une des revendications 23 ou 24, dans lequel l'inoculum fongique est un inoculum fongique spécifique de l'ectomycorhization constitué d'un ou plusieurs champignon ectomycorhizien du genre *Pisolithus,* notamment choisi parmi *Pisolithus albus, Pisolithus tinctorius,* ou du *genre Scleroderma,* notamment choisi parmi *Scleroderma dyctiosporum, Scleroderma verrucosum* et préférentiellement *Scleroderma dictyosporum.*

27. Procédé selon l'une des revendications 24 ou 25, dans lequel l'inoculum fongique est un inoculum constitué d'un ou plusieurs champignon endomycorhizien du genre *Glomus,* notamment choisi parmi *Glomus mosseae, Glomus fasciculatus, Glomus aggregatum, Glomus intraradices* et préférentiellement *Glomus intraradices* et d'un ou plusieurs champignon ectomycorhizien du genre *Pisolithus,* notamment choisi parmi *Pisolithus albus, Pisolithus tinctorius,* ou du genre *Scleroderma,* notamment choisi parmi *Scleroderma dyctiosporum, Scleroderma verrucosum* et préférentiellement *Scleroderma dictyosporum.*

28. Procédé selon l'une des revendications 23 à 27, dans lequel la taille des particules de ladite poudre est comprise de 1 µm à 1000 µm et préférentiellement de 1 µm à 500 µm.

29. Procédé selon l'une des revendications 23 à 28, dans lequel la poudre de termitières provient de termites du genre *Macrotermes* et préférentiellement du genre *Macrotermes subhyalinus.*

30. Procédé de stimulation de la mycorhization dans des espaces destinés aux cultures selon l'une des revendications 23 à 29, dans lequel un mélange d'inoculum fongique et de poudre de termitières, éventuellement broyée, en association avec un substrat ont été introduits, l'inoculum fongique et la poudre de termitières ayant été mélangés avec un substrat et ledit inoculum fongique étant préparé par croissance d'un champignon mycorhizien sur un support.

31. Procédé selon la revendication 30, dans lequel l'inoculum fongique est préparé par croissance d'au moins un champignon endomycorhizien à la dose utile d'environ 2g de racines mycorhizées sur un support constitué de sable en association avec une plante mycotrophe ou par croissance d'au moins un champignon ectomycorhizien à la dose utile d'environ 10 mg de poids sec de biomasse de champignon ectomycorhizien sur un support constitué de tourbe/vermiculite (1 :4, v:v) ou de billes d'alginate de calcium.

32. Procédé selon l'une des revendications 30 à 31, dans lequel l'inoculum fongique et la poudre de termitières sont mélangés avec un substrat, ledit substrat étant choisi parmi le sable, le compost provenant de résidus de culture et préférentiellement de terreau, ou un mélange de sable et de compost,
le rapport inoculum fongique : substrat étant compris de 1% (v:v) et 10% (v:v) et préférentiellement 1% (v:v) et 5% (v:v) et valant préférentiellement 1% (v:v) et
le rapport poudre de termitières : substrat étant compris de 1% (v:v) et 10% (v:v) et préférentiellement 1% (v:v)à 5%(v:v) et valant préférentiellement 1% (v :v)

33. Procédé selon l'une des revendications 30 à 32, comportant une étape d'introduction d'un élément unitaire de culture dans des espaces destinés aux cultures contenant préalablement l'inoculum fongique et la poudre de termitières, ledit élément unitaire de culture étant notamment une graine ou un plant.

34. Procédé selon l'une des revendications 30 à 33, comprenant les étapes suivantes :
**a.** préparation de l'inoculum fongique par croissance d'au moins un champignon endomycorhizien et d'au moins un champignon ectomycorhizien sur un support,
**b.** mélange de la poudre de termitières, éventuellement broyée, et de l'inoculum fongique avec un substrat,
**c.** introduction du mélange obtenu à l'étape précédente dans les espaces destinés aux cultures à la dose par élément unitaire de culture de 0,01 à 1 ml d'inoculum fongique et préférentiellement de 0.01 à 0.1 ml d'inoculum fongique,
**d.** introduction d'un élément unitaire de culture, notamment d'une graine à cultiver ou d'un plant, dans des espaces destinés aux cultures contenant le mélange.

## Claims

1. Use of at least one fungal inoculum and termite nest powder as an agent for stimulating the mycorrhiza in cultures, notably forest, cereal, fodder, garden, fruit or horticultural crops, said inoculum being used at a dose, for each grain or plant, which is about ten times less than the dose which is used in the absence of termite nest powder, the dose being from 0.01 to 1 ml of fungal inoculum, and preferentially from 0.01 to 0.1 ml of fungal inoculum and the inoculum : termite nest powder ratio being from 0.1 % (v:v) to 10 % (v:v), preferentially from 0.1% (v:v) to 5% (v:v), and more preferentially from 0.1% (v:v) to 1% (v:v)..

2. Use according to claim 1, wherein the termite nest powder is obtained from termites belonging to the genus *Macrotermes* and preferentially to the genus *Macrotermes subhyalinus.*

3. Use according to any of claims 1 or 2, wherein the fungal inoculum comprises at least one endomycorrhizal fungus belonging to the genus *Glomus,* notably which is chosen from among *Glomus mosseae, Glomus fasciculatus, Glomus aggregatum, Glomus intraradices* and preferentially *Glomus intraradices.*

4. Use according to any of claims 1 or 2, wherein the fungal inoculum comprises at least an ectomycorrhizal fungus belonging to the genus *Pisolithus,* notably chosen from among *Pisolithus albus, Pisolithus tinctorius,* or to the genus *Scleroderma,* notably chosen from among *Scleroderma dyctiosporum, Scleroderma verrucosum* end preferentially *Scleroderma dictyosporum,*

5. Use according to any of claims 1 or 2, wherein the fungal inoculum comprises an endomycorrhizal fungus belonging to the genus *Glomus,* notably chosen from among *Glomus mosseae, Glomus fasciculatus, Glomus aggregatum, Glomus intraradices* and preferentially *Glomus intraradices* and an ectomycorrhizal fungus belonging to the genus *Pisolithus,* notably chosen from among *Pisolithus albus, Pisolithus tinctorius,* or to the genus *Scleroderma,* notably chosen from among *Scleroderma dyctiosporum, Scleroderma verrucosum* et preferentially *Scleroderma dictyosporum,*

6. Use according to any of claims 1 to 5, wherein the fungal inoculum is prepared by growing an endomycorrhizal fungus on a support, notably in the presence of a mycotrophic plant, notably sandy type, or by growing an ectomycorrhizal fungus on a peat-vermiculite or calcium alginate bead type support.

7. Use according to any of claims 1 to 6, wherein the fungal inoculum and the termite nest powder are associated to a substrate, notably chosen from among sand, compost from cultivation residues and preferentially garden mould, or a mixture of sand and compost.

8. Use according to any of claims 1 to 7, wherein the fungal inoculum: substrate ratio of the inoculum is from 1% (v:v) to 10% (v:v), preferentially from 1% (v:v) to 5% (v:v), and is more preferentially 1% (v:v).

9. Use according to any of claims 1 to 8, wherein the termite nest powder: substrate ratio of the inoculum is from 1% (v:v) to 10% (v:v), preferentially from 1% (v:v) to 5% (v:v) and is more preferentially 1% (v:v).

10. Use according to any of claims 1 to 3 and 6 to 9, notably of an endomycorrhizal fungus, in areas to be cultivated, notably for cereal, fodder, garden, fruit or horticultural crops, and preferentially garden, fruit or horticultural crops.

11. Use according to any of claims 1 or 2 and 4 to 9, notably of an ectomycorrhizal fungus, in areas to be used for forest tree cultivation.

12. Use according to any of claims 1 to 9, notably of an endomycorrhizal and an ectomycorrhizal fungus, in areas to be used for forest tree cultivation, notably of ligneous species belonging to the genera Casuarina, Allocasuarina, Eucalyptus and Australien Acacia.

13. Composition of matter comprising at least one fungal inoculum constituted of one or more endomycorrhizal and/or ectomycorrhizal fungus, and termite nest powder, the inoculum : termite nest powder ratio being from 0.1 % (v:v) to 10 % (v:v), preferentially from 0.1% (v:v) to 5% (v:v), and more preferentially from 0.1% (v:v) to 1% (v:v).

14. Composition of matter according to claim 13, comprising :
**a**. a fungal inoculum comprising at least an endomycorrhizal fungus belonging to the genus *Glomus,* notably chosen from among *Glomus mosseae, Glomus fasciculatus, Glomus aggregatum, Glomus intraradices* and preferentially *Glomus intraradices,*
**b**. termite nest powder, wherein the particle size of said termite nest powder is from 1 µm to 1,000 µm and preferentially from 1 µm to 500 µm,
the fungal inoculum : termite nest powder ratio being from 0.1 % (v:v) to 10 % (v:v), preferentially from 0.1 (v:v) to 5% (v:v), and more preferentially from 0.1 (v:v) to 1% (v :v)

15. Composition according to claim 13 or 14, wherein the fungal inoculum comprises :
**i.** at least one endomycorrhizal fungus obtained, for instance, by growing a dose of about 2 g mycorrhized roots of said endomycorrhizal fungus,
**ii**. a sandy type support,
**iii.** a mycotrophic plant.

16. Composition according to any of claims 13 to 15, comprising :
**a.** a fungal inoculum comprising at least an endomycorhizal fungus,
**b.** termite nest powder,
**c.** a substrate chosen from among the compost as obtained from cultivation residues and preferentially from garden mould, sand, or a mixture of sand and compost, the termite nest powder : substrate ratio being from 1% (v:v) to 10% (v:v ) and preferentially from 1% (v:v) to 5% (v:v), and being more preferentially 1% (v:v), and the fungal inoculum : substrate ratio being from 1% (v:v) to 10% (v:v), preferentially from 1% (v:v) to 5%(v:v), and being more preferentially 1% (v:v).

17. Composition according to claim 13, comprising:
**a**. a fungal inoculum, comprising at least an ectomycorrhizal fungus belonging to the genus *Pisolithus,* notably chosen from among *Pisolithus albus, Pisolithus tinctorius,* or to the genus *Scleroderma,* notably chosen from among *Scleroderma dyctiosporum, Scleroderma verrucosum* and preferentially *Scleroderma dictyosporum,*
**b.** termite nest powder, wherein the particle size of said powder is from 1 µm to 1000 µm, preferentially from 1 µm to 500 µm,
**c.** a substrate chosen from among sand, a compost obtained from cultivation residues and preferentially from garden mould, or a mixture of sand and compost,
wherein the fungal inoculum termite nest powder ratio is from 0.1 % (v:v) to 10% (v:v), preferentially from 0.1% (v:v) to 5% (v:v) and more preferentially from 0.1% (v:v) to 1% (v:v), and
the fungal inoculum : substrate ratio being from 1% (v:v) to 10% (v:v), preferentially from 1% (v:v) to 5% (v:v), and being more preferentially 1% (v:v), and
the termite nest powder : substrate ratio being from 1% (v:v) to 10% (v:v), preferentially from 1% (v:v) to 5% (v:v), and being more preferentially 1% (v:v),
it being understood that at least one of the two ratios, be it fungal inoculum : substrate or termite nest powder : substrate, is below 10% (v :v), and preferentially that at least one of the two above-mentioned ratios is from 1% (v :v) to 5% (v :v).

18. Composition according to claim 17, wherein the fungal inoculum comprises :
**i**. at least an ectomycorrhizal fungus, obtained for instance by growing a 10 mg (dry weight) biomass dose of ectomycorrhizal fungus.
ii. a peat-vermiculite type (1 :4, v:v) or calcium alginate bead support.

19. Composition according to anyone of claims 13 to 16, comprising :
**a.** a fungal inoculum comprising an endomycorrhizal fungus belonging to the genus *Glomus,* notably chosen from among *Glomus mosseae, Glomus fasciculatus, Glomus aggregatum, Glomus intraradices* and preferentially *Glomus intraradices,* and an ectomycorrhizal fungus belonging to the genus *Pisolithus,* notably chosen from among *Pisolithus albus, Pisolithus tinctorius,* or the genus *Scleroderma,* notably chosen from among *Scleroderma dyctiosporum, Scleroderma verrucosum* and preferentially *Scleroderma dictyosporum,*
**b.** termite nest powder, wherein the particle size of said powder is from 1 µm to 1000 µm and preferentially from 1 µm to 500 µm,
the fungal inoculum : powder ratio being from 0.1 % (v:v) to 10 % (v:v), preferentially from 0.1 % (v:v) to 5 % (v:v), and more preferentially from 0.1 % (v:v) to 1% (v :v).

20. Composition according to claim 19, wherein the fungal inoculum comprises :
**i.** at least one endomycorrhizal fungus obtained for instance by growing a dose of about 2 g mycorrhized roots of said endomycorrhizal fungus and an ectomycorrhizal fungus obtained for instance by growing a 10 mg dose (dry weight) of ectomycorrhizal fungus biomass,
**ii.** a sandy type support in association with a mycotrophic plant for the endomycorrhizal fungus, and a peat-vermiculite (1 :4, v:v) or calcium alginate bead type support for the ectomycorrhizal fungus.

21. Composition according to any of claims 19 or 20, comprising :
**a.** a fungal inoculum,
**b.** termite nest powder,
**c**. a substrate chosen from among a compost obtained from cultivation residues, and preferentially from garden mould, sand, or a mixture of sand and compost,
wherein the termite nest powder : substrate ratio is from 1% (v:v) to 10% (v:v ), preferentially from 1% (v:v) to 5% (v:v); and being more preferentially 1% (v:v), and the fungal inoculum : substrate ratio being from 1% (v:v) to 10% (v:v), preferentially from 1% (v:v) to 5% (v:v), and being more preferentially 1% (v:v).

22. Composition according to any of claims 14 to 21, wherein the termite nest powder is obtained from termites belonging to the genus *Macrotermes,* and preferentially to the genus *Macrotermes subhyalinus,*

23. A process for stimulating mycorrhiza in areas to be cultivated, comprising a step of introduction of a mixture of at least one fungal inoculum constituted of one or more endomycorrhizal and/or ectomycorrhizal fungus, and termite nest powder, which may be ground, such as defined in claim 1, the inoculum: termite nest powder ratio being from 0.1 % (v:v) to 10 % (v:v), preferentially from 0.1% (v:v) to 5% (v:v), and more preferentially from 0.1 % (v:v) to 1% (v:v), after a preparation step of the fungal inoculum by growing at least an endomycorrhizal fungus with a support, or by growing at least an ectomycorrhizal fungus on a support, and said inoculum being used at a dose, for each grain or plant, which is about ten times below the dose which is used in the absence of termite nest powder, from 0.01 to 1 ml of fungal inoculum, and preferentially from 0.01 to 0.1 ml of fungal inoculum.

24. A process according to claim 23, wherein the dose of fungal inoculum, for each cultivation unit element, is from 0.01 to 1 ml, and preferentially from 0.01 to 0.1 ml.

25. A process according to any of claims 23 or 24, wherein the fungal inoculum is a fungal inoculum which is specific for endomycorrhiza and comprises at least an endomycorrhizal fungus belonging to the genus *Glomus,* notably chosen from among *Glomus mosseae, Glomus fasciculatus, Glomus aggregatum, Glomus intraradices,* and preferentially *Glomus intraradices*

26. A process according to any of claims 23 or 24, wherein the fungal inoculum is a fungal inoculum which is specific for ectomycorrhiza and comprises at least one ectomycorrhizal fungus belonging to the genus *Pisolithus,* notably chosen from among *Pisolithus albus, Pisolithus tinctorius,* or belonging to the genus *Scleroderma,* notably chosen from among *Scleroderma dyctiosporum, Scleroderma verrucosum* and preferentially *Scleroderma, dictyosporum.*

27. A process according to any of claims 23 or 24, wherein the fungal inoculum is an inoculum which comprises at least one endomycorrhizal fungus belonging to the genus *Glomus,* notably chosen from among *Glomus mosseae, Glomus fasciculatus, Glomus aggregatum, Glomus intraradices* and preferentially *Glomus intraradices,* and at least one ectomycorhizal fungus belonging to the genus *Pisolithus,* notably chosen from among *Pisolithus albus, Pisolithus tinctorius,* or the genus *Scleroderma,* notably chosen from among *Scleroderma dyctiosporum, Scleroderma verrucosum* and preferentially *Scleroderma dictyosporum.*

28. A process according to any of claims 23 to 27, wherein said powder has a particle size from 1 µm to 1000 µm and preferentially from 1 µm to 500 µm.

29. A process according to any of claims 23 to 28, wherein the termite nest powder is obtained from termites belonging to the genus *Macrotermes* and preferentially belonging to the genus *Macrotermes subhyalinus.*

30. A process for stimulating mycorrhiza in areas to be cultivated according to any of claims 23 to 29, wherein a mixture of fungal inoculum and termite nest powder, which may be ground, has been introduced in association with a substrate, the fungal inoculum and the termite nest powder having been mixed with a substrate, and said fungal inoculum having been prepared by growing a mycorrhizal fungus on a support.

31. A process according to any of claim 30, wherein the fungal inoculum is prepared by growing at least one endomycorrhizal fungus at the useful dose of ca. 2 g mycorrhized roots on a support made up of sand in association with a mycotrophic plant, or by growing at least one ectomycorrhizal fungus at the useful dose of about 10 mg (dry weight) of ectomycorrhizal fungus biomass on a support which is made up of peat/vermiculite (1 :4, v:v) or calcium alginate beads.

32. A process according to any of claims 30 or 31, wherein the fungal inoculum and the termite nest powder are mixed with a substrate, said substrate being chosen from among sand, compost as obtained from cultivation residues and preferentially garden mould, or a mixture of sand and compost,
the fungal inoculum : substrate ratio being from 1% (v:v) to 10% (v:v), preferentially from 1% (v:v) to 5% (v:v), and being more preferentially 1% (v:v) and
the termite nest powder : substrate ratio being from 1% (v:v) to 10% (v:v), preferentially from 1% (v:v) to 5% (v:v), and being more preferentially 1% (v :v).

33. A process according to any of claims 30 to 32, including a step for the introduction of a cultivation unit element into areas to be cultivated, this element containing from the start the fungal inoculum and the termite nest powder, said cultivation unit element notably being a grain or a plant.

34. A process according to any of claims 30 to 33, comprising the following steps :
**a**. preparation of the fungal inoculum by growing at least an endomycorrhizal fungus and at least an ectomycorrhizal fungus on a support,
**b**. mixing of the termite nest powder, which may be ground, and of the fungal inoculum with a substrate,
**c**. introduction of the mixture as obtained at the preceding step into areas to be cultivated, at a dose, per cultivation unit element, from 0.01 to 1 ml fungal inoculum, and preferentially from 0.01 to 0.1 ml fungal inoculum,
**d**. introduction of a cultivation unit element, notably of a grain or plant to be cultivated, into areas to be used for the cultivation of crops containing the mixture.

## Patentansprüche

1. Verwendung mindestens eines Pilzinokulums, bestehend aus einem oder mehreren Endomykorrhiza- und/oder Ektomykorrhizapilzen, und Termitenbaupulver als Mittel zur Stimulation der Mykorrhizierung von Kulturen, insbesondere forstwirtschaftlichen Kulturen, Getreideanbaukulturen, Futtermittelanbaukulturen, Marktgärtnereikulturen, Obstanbaukulturen oder Gartenbaukulturen, wobei das Inokulum in einer Dosis pro Samenkorn oder Pflanze verwendet wird, die etwa mindestens zehn Mal geringer ist als die Dosis, die in Abwesenheit von Termitenbaupulver verwendet wird, wobei die Dosis 0,01 bis 1 ml Pilzinokulum und vorzugsweise 0,01 bis 0,1 ml Pilzinokulum beträgt, und das Verhältnis Inokulum : Termitenbaupulver im Bereich von 0,1 % (v:v) bis 10 % (v:v), bevorzugt von 0,1 % (v:v) bis 5 % (v:v) und stärker bevorzugt von 0,1 % (v:v) bis 1 % (v:v) liegt.

2. Verwendung nach Anspruch 1, wobei das Termitenbaupulver von Termiten der Gattung *Macrotermes* und bevorzugt von der Gattung *Macrotermes subhyalinus* stammt.

3. Verwendung nach einem der Ansprüche 1 oder 2, wobei das Pilzinokulum aus einem oder mehreren Endomykorrhizapilzen der Gattung *Glomus* besteht, insbesondere ausgewählt aus *Glomus mosseae, Glomus fasciculatus, Glomus aggregatum, Glomus intraradices* und bevorzugt *Glomus intraradices.*

4. Verwendung nach einem der Ansprüche 1 oder 2, wobei das Pilzinokulum aus einem oder mehreren Ektomykorrhizapilzen der Gattung *Pisolithus,* insbesondere ausgewählt aus *Pisolithus albus, Pisolithus tinctorius,* oder der Gattung *Scleroderma,* insbesondere ausgewählt aus *Scleroderma dyctiosporum, Scleroderma verrucosum* und bevorzugt *Scleroderma dictyosporum* besteht.

5. Verwendung nach einem der Ansprüche 1 oder 2, wobei das Pilzinokulum aus einem oder mehreren Endomykorrhizapilzen der Gattung *Glomus,* insbesondere ausgewählt aus *Glomus mosseae, Glomus fasciculatus, Glomus aggregatum, Glomus intraradices* und bevorzugt Glomus intraradices und aus einem oder mehreren Ektomykorrhizapilzen der Gattung *Pisolithus,* insbesondere ausgewählt aus *Pisolithus albus, Pisolithus tinctorius,* oder der Gattung *Scleroderma,* insbesondere ausgewählt aus *Scleroderma dyctiosporum, Scleroderma verrucosum* und bevorzugt *Scleroderma dictyosporum besteht.*

6. Verwendung nach einem der Ansprüche 1 bis 5, wobei das Pilzinokulum durch Kultivieren eines Endomykorrhizapilzes auf einem Träger, insbesondere in Gegenwart einer mykotrophen Pflanze, insbesondere vom Typ Sand, oder Wachsen eines Ektomykorrhizapilzes auf einem Träger vom Typ Torf-Vermiculit oder Calciumalginatkugeln hergestellt wird.

7. Verwendung nach einem der Ansprüche 1 bis 6, wobei das Pilzinokulum und das Termitenbaupulver mit einem Substrat assoziiert sind, insbesondere ausgewählt aus Sand, Kompost, der aus Ernterückständen stammt, und bevorzugt aus Humus, oder einem Gemisch aus Sand und Kompost.

8. Verwendung nach einem der Ansprüche 1 bis 7, wobei das Verhältnis Inokulum : Termitenbaupulver im Bereich von 0,1 % (v:v) bis 10 % (v:v), bevorzugt von 0,1 % (v:v) bis 5 % (v:v) und stärker bevorzugt bei 1 % (v:v) liegt.

9. Verwendung nach einem der Ansprüche 1 bis 8, wobei das Verhältnis Pilzinokulum : Inokulumsubstrat im Bereich von 1% (v:v) bis 10% (v:v), bevorzugt von 1% (v:v) bis 5% (v:v) liegt und stärker bevorzugt 1% (v:v) beträgt.

10. Verwendung nach einem der Ansprüche 1 bis 3 und 6 bis 9 insbesondere eines Endomykorrhizapilzes in Räumen, die für Kulturen, insbesondere Getreideanbaukulturen, Futtermittelanbaukulturen, Marktgärtnereikulturen, Obstanbaukulturen oder Gartenbaukulturen und bevorzugt für Marktgärtnereikulturen, Obstanbaukulturen oder Gartenbaukulturen bestimmt sind.

11. Verwendung nach einem der Ansprüche 1 oder 2 und 4 bis 9 insbesondere eines Ektomykorrhizapilzes in Räumen, die für forstwirtschaftliche Kulturen bestimmt sind.

12. Verwendung nach einem der Ansprüche 1 bis 9 insbesondere eines Endomykorrhiza- und Ektomykorrhizapilzes in Räumen, die für forstwirtschaftliche Kulturen, insbesondere Holzarten der Gattungen Casuarina, Allocasuarina, Eukalyptus und australische Akazie bestimmt sind.

13. Zusammensetzung, umfassend mindestens ein Pilzinokulum, das aus einem oder mehreren Endomykorrhiza- und/oder Ektomykorrhizapilzen und Termitenbaupulver besteht, wobei das Verhältnis Inokulum : Termitenbaupulver im Bereich von 0,1 % (v:v) bis 10 % (v:v), bevorzugt von 0,1 % (v:v) bis 5 % (v:v) und stärker bevorzugt von 0,1 % (v:v) bis 1 % (v:v) liegt.

14. Zusammensetzung nach Anspruch 13, umfassend:
a. ein Pilzinokulum, das aus einem oder mehreren Endomykorrhizapilzen der Gattung *Glomus* besteht, wie in Anspruch 3 definiert,
b. Termitenbaupulver wie in Anspruch 2 definiert, wobei die Größe der Teilchen des Termitenbaupulvers im Bereich von 1 µm bis 1.000 µm und bevorzugt von 1 µm bis 500 µm liegt, wobei das Verhältnis Pilzinokulum : Termitenbaupulver im Bereich von 0,1 % (v:v) bis 10 % "(v:v) , bevorzugt von 0,1 % (v:v) bis 5 % (v:v) und stärker bevorzugt von 0,1 % (v:v) bis 1 % (v:v) liegt.

15. Zusammensetzung nach Anspruch 13 oder 14, wobei das Pilzinokulum besteht aus:
i. mindestens einem Endomykorrhizapilz, der zum Beispiel aus der Kultivierung einer Dosis von etwa 2 g mykorrhizierten Wurzeln des Endomykorrhizapilzes resultiert,
ii. ein Träger vom Typ Sand,
iii. eine mykotrophe Pflanze.

16. Zusammensetzung nach einem der Ansprüche 13 bis 15, umfassend:
a. ein Pilzinokulum, bestehend aus einem oder mehreren Endomykorrhizapilzen,
b. Termitenbaupulver,
c. einem Substrat, ausgewählt aus Kompost, der aus Ernterückständen stammt, und bevorzugt aus Humus, Sand oder einem Gemisch aus Sand und Kompost, wobei das Verhältnis Termitenbaupulver : Substrat im Bereich von 1 % (v:v) bis 10 % (v:v) und bevorzugt von 1 % (v:v) bis 5 % (v:v) liegt und bevorzugt 1 % (v:v) beträgt und das Verhältnis Pilzinokulum : Substrat im Bereich von 1 % (v:v) bis 10 % (v:v), bevorzugt 1 % (v:v) bis 5 % (v:v) liegt und stärker bevorzugt 1 % (v:v) beträgt.

17. Zusammensetzung nach Anspruch 13, umfassend:
a. ein Pilzinokulum, das aus einem oder mehreren Ektomykorrhizapilzen der Gattung Pisolithus besteht, wie in Anspruch 4 definiert,
b. Termitenbaupulver wie in Anspruch 2 definiert, wobei die Größe der Teilchen des Pulvers im Bereich von 1 µm bis 1.000 µm, bevorzugt von 1 µm bis 500 µm liegt,
c. ein Substrat, wie in Anspruch 7 definiert, wobei das Verhältnis Pilzinokulum : Termitenbaupulver im Bereich von 0,1 % (v.:v) bis 10 % (v:v), bevorzugt von 0,1 % (v:v) bis 5 % (v:v) und stärker bevorzugt von 0,1 % (v:v) bis 1 % (v:v) liegt, und
wobei das Verhältnis Pilzinokulum : Substrat im Bereich von 1 % (v: v) bis 10 % (v:v), bevorzugt von 1 % (v:v) bis 5 % (v:v) liegt und stärker bevorzugt 1 % (v:v) beträgt.
wobei das Verhältnis Termitenbaupulver : Substrat im Bereich von 1 % (v:v) bis 10 % (v:v) und bevorzugt von 1 % (v:v) bis 5 % (v:v) liegt und stärker bevorzugt 1 % (v:v) beträgt.
unter der Voraussetzung, dass mindestens eines der beiden Verhältnisse, Pilzinokulum : Substrat oder Termitenbaupulver : Substrat kleiner als 10 % (v:v) ist und dass bevorzugt mindestens eines der beiden Verhältnisse im Bereich von 1 % (v:v) bis 5 % (v:v) liegt.

18. Zusammensetzung nach Anspruch 17, wobei das Pilzinokulum besteht aus:
i. einem oder mehreren Ektomykorrhizapilzen, die zum Beispiel aus der Kultivierung einer Dosis von 10 mg Trockengewicht der Biomasse des Ektomykorrhizapilzes resultiert.
ii. einem Träger vom Typ Torf-Vermiculit (1:4, v:v) oder Calciumalginatkugeln.

19. Zusammensetzung nach einem der Ansprüche 13 bis 16, umfassend:
a. ein Pilzinokulum, bestehend aus einem Endomykorrhizapilz der Gattung Glomus, wie in Anspruch 3 definiert, und einem Ektomykorrhizapilz der Gattung Pisolithus, wie in Anspruch 4 definiert,
b. Termitenbaupulver, wie in Anspruch 2 definiert, wobei die Teilchengröße des Pulvers im Bereich von 1 µm bis 1.000 µm und bevorzugt von 1 µm bis 500 µm liegt,
wobei das Verhältnis Pilzinokulum : Pulver im Bereich von 0,1 % (v:v) bis 10 % (v:v), bevorzugt von 0,1 % (v:v) bis 5 % (v:v) und stärker bevorzugt von 0,1 % (v:v) bis 1 % (v:v) liegt.

20. Zusammensetzung nach Anspruch 19, wobei das Pilzinokulum besteht aus:
i. einem oder mehreren Endomykorrhizapilzen, die zum Beispiel aus der Kultivierung einer Dosis von etwa 2 g mykorrhizierten Wurzeln des Endomykorrhizapilzes resultiert und einem Ektomykorrhizapilz, der zum Beispiel aus der Kultur einer Dosis von 10 mg Trockengewicht der Biomasse von Ektomykorrhizapilz resultiert,
ii. einem Träger vom Typ Sand in Assoziation mit einer mykotrophen Pflanze für den Endomykorrhizapilz und einem Träger vom Typ Torf-Vermiculit (1:4, v:v) oder Calciumalginatkugeln für den Ektomykorrhizapilz.

21. Zusammensetzung nach einem der Ansprüche 19 oder 20, umfassend:
a. ein Pilzinokulum,
b. Termitenbaupulver,
c. ein Substrat, ausgewählt aus Kompost, der aus Ernterückständen stammt, und bevorzugt aus Humus, Sand oder einem Gemisch aus Sand und Kompost, wobei das Verhältnis Termitenbaupulver : Substrat im Bereich von 1 % (v:v) bis 10 % (v:v) und bevorzugt von 1 % (v:v) bis 5 % (v:v) liegt und bevorzugt 1 % (v:v) beträgt und das Verhältnis Pilzinokulum : Substrat im Bereich von 1% (v:v) bis 10 % (v:v), bevorzugt 1 % (v:v) bis 5 % (v:v) liegt und stärker bevorzugt 1 % (v:v) beträgt.

22. Zusammensetzungen nach einem der Ansprüche 13 bis 21, wobei das Termitenbaupulver von Termiten der Gattung *Macrotermes* und bevorzugt von der Gattung *Macrotermes subhyalinus* stammt.

23. Verfahren zur Stimulierung der Mykorrhizierung in Räumen, die für Kulturen bestimmt sind, umfassend einen Schritt der Einführung eines Gemischs aus mindestens einem Pilzinokulum, bestehend aus einem oder mehreren Endomykorrhiza- und/oder Ektomykorrhizapilzen und gegebenenfalls zerkleinertem Termitenbaupulver, wie in Anspruch 1 definiert,
wobei das Verhältnis Inokulum : Termitenbaupulver im Bereich von 0,1 % (v:v) bis 10 % (v:v), bevorzugt von 0,1 % (v:v) bis 5 % (v:v), und stärker bevorzugt von 0,1 % (v:v) bis 1 % (v:v) liegt, nach einem Schritt zur Herstellung von Pilzinokulum durch Kultivierung mindestens eines Endomykorrhizapilzes mit einem Träger oder durch Kultur mindestens eines Ektomykorrhizapilzes auf einem Träger und wobei das Inokulum in einer Dosis pro Samenkorn oder Pflanze verwendet wird, die etwa mindestens zehn Mal geringer ist als die Dosis, die in Abwesenheit von Termitenbaupulver verwendet wird, von 0,01 bis 1 ml Pilzinokulum und bevorzugt von 0,01 bis 0,1 ml Pilzinokulum.

24. Verfahren nach Anspruch 23, wobei die Pilzinokulumdosis pro einzelner Kultureinheit im Bereich von 0,01 bis 1 ml und bevorzugt von 0,01 bis 0,1 ml liegt.

25. Verfahren nach einem der Ansprüche 23 oder 24, wobei das Pilzinokulum ein spezifisches Pilzinokulum zur Endomykorrhisierung ist, bestehend aus einem oder mehreren Endomykorrhizapilzen der Gattung *Glomus,* insbesondere ausgewählt aus *Glomus mosseae, Glomus fasciculatus, Glomus aggregatum, Glomus intraradices* und bevorzugt *Glomus intraradices.*

26. Verfahren nach einem der Ansprüche 23 oder 24, wobei das Pilzinokulum ein spezifisches Pilzinokulum zur Ektomykorrhisierung ist, bestehend aus einem oder mehreren Ektomykorrhizapilzen der Gattung *Pisolithus,* insbesondere ausgewählt aus *Pisolithus albus, Pisolithus tinctorius,* oder der Gattung *Scleroderma,* insbesondere ausgewählt aus *Scleroderma dyctiosporum, Scleroderma verrucosum* und bevorzugt *Scleroderma dictyosporum.*

27. Verfahren nach einem der Ansprüche 24 oder 25, wobei das Pilzinokulum ein Inokulum ist, bestehend aus einem oder mehreren Endomykorrhizapilzen der Gattung *Glomus,* insbesondere ausgewählt aus *Glomus mosseae, Glomus fasciculatus, Glomus aggregatum, Glomus intraradices* und bevorzugt Glomus intraradices und aus einem oder mehreren Ektomykorrhizapilzen der Gattung *Pisolithus,* insbesondere ausgewählt aus *Pisolithus albus, Pisolithus tinctorius,* oder der Gattung *Scleroderma,* insbesondere ausgewählt aus *Scleroderma dyctiosporum, Scleroderma verrucosum* und bevorzugt *Scleroderma dictyosporum.*

28. Verfahren nach einem der Ansprüche 23 bis 27, wobei die Teilchengröße des Pulvers im Bereich von 1 µm bis 1.000 µm und bevorzugt von 1 µm bis 500 µm liegt,

29. Verfahren nach einem der Ansprüche 23 bis 28, wobei das Termitenbaupulver von Termiten der Gattung *Macrotermes* und bevorzugt von der Gattung *Macrotermes subhyalinus* stammt.

30. Verfahren zur Stimulierung der Mykorrhizierung in Räumen, die für Kulturen bestimmt sind nach einem der Ansprüche 23 bis 29, wobei ein Gemisch aus Pilzinokulum und gegebenenfalls zerkleinertem Termitenbaupulver in Assoziation mit einem Substrat eingeführt wurde, wobei das Pilzinokulum und das Termitenbaupulver mit einem Substrat gemischt wurden und das Pilzinokulum durch Kultivierung eines Mykorrhizapilzes auf einem Träger hergestellt wurde.

31. Verfahren nach Anspruch 30, wobei das Pilzinokulum hergestellt wird durch Kultivierung mindestens eines Endomykorrhizapilzes in der geeigneten Dosis von etwa 2 g mykorrhizierten Wurzeln auf einem Träger, bestehend aus Sand in Assoziation mit einer mykotrophen Pflanze oder durch Kultur mindestens eines Ektomykorrhizapilzes in der geeigneten Dosis von etwa 10 mg Trockengewicht der Biomasse des Ektomykorrhizapilzes auf einem Träger, bestehend aus Torf-Vermiculit (1:4, v:v) oder Calciumalginatkugeln.

32. Verfahren nach einem der Ansprüche 30 bis 31, wobei das Pilzinokulum und das Termitenbaupulver mit einem Substrat gemischt werden, wobei das Substrat insbesondere ausgewählt ist aus Sand, Kompost, der aus Ernterückständen stammt, und bevorzugt aus Humus, oder einem Gemisch aus Sand und Kompost,
wobei das Verhältnis Pilzinokulum : Substrat im Bereich von 1% (v:v) bis 10 % (v:v) und bevorzugt von 1% (v:v) bis 5 % (v:v) liegt und bevorzugt 1 % (v:v) beträgt und das Verhältnis Termitenbaupulver : Substrat im Bereich von 1 % .(v:v) bis 10 % (v:v) und bevorzugt 1 % (v:v) bis 5 % (v:v) liegt und bevorzugt 1 % (v:v) beträgt.

33. Verfahren nach einem der Ansprüche 30 bis 32, umfassend einen Schritt zur Einführung einer einzelnen Kultureinheit in Räume, die für Kulturen bestimmt sind, die bereits ein Pilzinokulum und Termitenbaupulver enthalten, wobei die einzelne Kultureinheit insbesondere ein Samenkorn oder eine Pflanze ist.

34. Verfahren nach einem der Ansprüche 30 bis 33, das die folgenden Schritte umfasst:
a. Herstellen von Pilzinokulum durch Kultur mindestens eines Endomykorrhizapilzes und mindestens eines Ektomykorrhizapilzes auf einem Träger,
b. Mischen von gegebenenfalls zerkleinertem Termitenbaupulver und dem Pilzinokulum mit einem Substrat,
c. Einführen des im vorhergehenden Schritt erhaltenen Gemischs in die Räume, die für Kulturen bestimmt sind, in der Dosis pro einzelner Kultureinheit von 0,01 bis 1 ml Pilzinokulum und bevorzugt von 0,01 bis 0,1 ml Pilzinokulum,
d. Einführen einer einzelnen Kultureinheit, insbesondere eines zu kultivierenden Samenkorns oder einer Pflanze, in Räume, die für Kulturen bestimmt sind, die das Gemisch enthalten.
